# EUROPEAN PATENT SPECIFICATION

(11) **EP 3 557 781 B1**
(45) Date of publication and mention of the grant of the patent: **22.12.2021**
(21) Application number: 19169097.3
(22) Date of filing: 12.04.2019
(51) Int. Cl.: H04B 7/185, H04W 48/18

(54) **METHODS AND APPARATUS FOR DYNAMIC NETWORK EVALUATION AND NETWORK SELECTION**
VERFAHREN UND VORRICHTUNG ZUR DYNAMISCHEN NETZWERKAUSWERTUNG UND NETZWERKAUSWAHL
PROCÉDÉS ET APPAREIL POUR L'ÉVALUATION ET LA SÉLECTION DYNAMIQUES DE RÉSEAUX

(30) Priority: 16.04.2018 US 201815954239
(43) Date of publication of application: 23.10.2019
(73) Proprietor: General Electric Company, Schenectady, NY 12345 (US)
(72) Inventor: GARDNER, Eric, Pinellas Park, FL Florida 33782 (US); BOLLING, Randy, Pinellas Park, FL Florida 33782 (US); GUIDOBONI, Michael, Pinellas Park, FL Florida 33782 (US)
(74) Representative: Openshaw & Co.

(56) References cited:
- EP-A1- 2 023 685
- EP-A1- 2 378 676
- EP-A1- 3 214 873
- WO-A1-2017/137630

## Description

### FIELD OF THE DISCLOSURE

This disclosure relates generally to message transmission, and, more particularly, to methods and apparatus for dynamic network evaluation and network selection.

### BACKGROUND

In recent years, the amount of information that aircraft communicate and the corresponding network traffic associated with such communications has increased dramatically. Such information includes messages such as OOOI messages (Gate Out, Wheels Off, Wheels On, Gate In), air traffic control messages (ATC), air traffic services (ATS) messages, aeronautical operational control (AOC) messages, and/or other messages from onboard systems. As messages have become more detailed, the corresponding size and cost of these messages has increased accordingly.

EP 3,214,873 A1 describes an aircraft message routing system wherein a network is selected based: on message priority, data indicative of availability, and one or more second parameters associated with the networks.

EP 2,378,676 A1 describes a data link manager that selects a data link from either a first set of air-ground data links and second sets of air-ground data links based on information provided by applications and a routing policy, and controls a legacy router and an internet protocol router to route communication messages via the selected data link.

### SUMMARY

Example methods, systems, and articles of manufacture disclosed herein include a computing device onboard an aircraft according to claim

Example methods, systems, and articles of manufacture disclosed herein include a non-transitory computer readable storage medium according to claim 9.

### BRIEF DESCRIPTION OF THE DRAWINGS

FIG. 1 is a schematic illustration of an example system constructed in accordance with the teachings of this disclosure for dynamic network evaluation and network selection.
FIG. 2 is a block diagram showing an example implementation of the ground-based computing device of FIG. 1.
FIG. 3 is a block diagram showing an example implementation of the onboard computing device of FIG. 1.
FIGS. 4A-4C are a flowcharts representative of machine readable instructions that can be used to implement the onboard computing device of FIG. 3 to perform dynamic network evaluation and network selection.
FIG. 5 is a flowchart representative of machine readable instructions that can be used to implement the onboard computing device of FIG. 3 to implement a scan period technique.
FIG. 6 is a flowchart representative of machine readable instructions that can be used to implement the onboard computing device of FIG. 3 to perform dynamic network evaluation and network selection without network mapping.
FIG. 7 is a flowchart representative of machine readable instructions that can be used to implement the onboard computing device of FIG. 3 to transmit a message bundle.
FIG. 8 is a flowchart representative of machine readable instructions that can be used to implement the ground-based computing device of FIG. 3 to perform network mapping.
FIG. 9 is a table representative of example messages and message parameters that can be received and processed using the techniques disclosed herein.
FIG. 10 is a table representative of example networks and network parameters that can be determined and utilized using the techniques disclosed herein.
FIG. 11 is a table including example messages processed in accordance with the techniques disclosed herein.
FIG. 12A is a schematic illustration of an example network map representing network availability of a first network on a flight path.
FIG. 12B is a schematic illustration of an example network map representing signal strength for the first network on the flight path.
FIG. 12C is a schematic illustration of an example network map representing network availability of a second network on a flight path.
FIG. 13A is a schematic illustration of an example combined network map representing the combined network availabilities of the first network and the second network on the flight path associated with FIGS. 12A-12C.
FIG. 13B is a schematic illustration of an example probability plot corresponding to a forecast of network availabilities of the first network and the second network on the flight path associated with FIGS. 12A-13A.
FIG. 14 is a schematic illustration of a message transmission scheme without bundling and delayed message transmission.
FIG. 15 is a schematic illustration of a message transmission scheme including bundling and delayed message transmission.
FIG. 16 is a block diagram of an example processor platform capable of executing the instructions of FIG. 8 to implement the ground-based computing device of FIG. 2
FIG. 17 is a block diagram of an example processor platform capable of executing the instructions of FIGS. 4-7 to implement the onboard computing device of FIG. 3.

The figures are not to scale. Wherever possible, the same reference numbers will be used throughout the drawing(s) and accompanying written description to refer to the same or like parts.

### DETAILED DESCRIPTION

In the following detailed description, reference is made to the accompanying drawings that form a part hereof, and in which is shown by way of illustration specific examples that can be practiced. These examples are described in sufficient detail to enable one skilled in the art to practice the subject matter, and it is to be understood that other examples can be utilized and that logical, mechanical, electrical and other changes can be made without departing from the scope of the subject matter of this disclosure. The following detailed description is, therefore, provided to describe an exemplary implementation and not to be taken as limiting on the scope of the subject matter described in this disclosure. Certain features from different aspects of the following description can be combined to form yet new aspects of the subject matter discussed below.

When introducing elements of various embodiments of the present disclosure, the articles "a," "an," "the," and "said" are intended to mean that there are one or more of the elements. The terms "comprising," "including," and "having" are intended to be inclusive and mean that there can be additional elements other than the listed elements.

As used herein, the terms "system," "unit," "module," "engine," etc., can include a hardware and/or software system that operates to perform one or more functions. For example, a module, unit, or system can include a computer processor, controller, and/or other logic-based device that performs operations based on instructions stored on a tangible and non-transitory computer readable storage medium, such as a computer memory. Alternatively, a module, unit, engine, or system can include a hard-wired device that performs operations based on hard-wired logic of the device. Various modules, units, engines, and/or systems shown in the attached figures can represent the hardware that operates based on software or hardwired instructions, the software that directs hardware to perform the operations, or a combination thereof.

Immediately before, during and following a flight, aircraft continually communicate a variety of messages to aviation services (e.g., air traffic control, aircraft maintenance, etc.) and partners (e.g., airlines, on-flight meal providers, etc.). Some messages can pertain to critical operational information, such as air traffic control messages, which can convey information that is critical to the safe operation and navigation of the aircraft. Other messages can be less critical, such as a maintenance message to inform a ground maintenance operation that a light bulb is not operational in an overhead bin. Additionally, some messages can include signals from various components of the aircraft, such as alerts (e.g., if a component is nearing a maintenance milestone, an error has been registered, etc.) or live data reporting (e.g., a parameter pertaining to the performance of the component, a status update, etc.). Other messages can include locational data for use by various end-users in tracking the aircraft's location. Some messages can be entered for transmission by a flight attendant, pilot, or other occupant of the aircraft. In some aircraft, various types of messages can be sent that are specific to the airline operating the aircraft (e.g., commercially valuable data, etc.). As more onboard components become equipped with sensors and acquire enhanced data acquisition capabilities, the types and quantities of messages that are transmitted on aircraft can be expected to increase in the future.

When messages are entered by any onboard system of the aircraft to be transmitted to a ground-based or network-based end-point, the messages can be transmitted via a variety of networks. For example, the messages can be transmitted by an Aircraft Communications Addressing and Reporting System (ACARS) network, by a Wi-Fi network, by a satellite communications (SATCOM) network, by a Future Air Navigation System (FANS) network, or by any other available network. Each type of network can have one or more available service providers, dependent on the location of the aircraft, the network equipment on the aircraft, and/or other factors. The specific network utilized will have various parameters associated with the network. For example, the service provider will assign various costs for using the networks. Such costs can include a fixed cost for any usage of the network (e.g., a general service accessibility cost, etc.), a cost for each transmission, and/or a cost dependent on the size of the message transmission. Additionally, different networks can have different security capabilities, different reliability characteristics, different traffic and congestion characteristics, different availabilities (e.g., dependent on location and other factors, etc.), and various other differences. While some of these parameters are relatively permanent (e.g., security capabilities, etc.) and/or dependent on a network configuration employed by the service provider, other factors can be highly variable (e.g., costs, traffic, availability, etc.).

Conventionally, an operator of an aircraft can configure the aircraft to transmit messages using a lowest cost currently available network. Such configuration can be done via an aircraft's router, in cases where the aircraft has a router to manage the transmission of messages. Some aircraft routers can be configured with a preferred list of networks upon which to transmit messages, and the messages can be transmitted via the best network that is currently available at the time the message is entered for transmission. In some examples, one network can be configured to transmit messages, with other networks only utilized when the primary network is unavailable. Conventional approaches therefore fail to utilize a preferred transmission scheme, opting for overall simplicity (e.g., a single preferred network transmission scheme, etc.) over factors such as cost effectiveness, security and reliability. Further, conventional approaches that have a preconfigured, static network selection do not address the variable factors that affect network transmission. Additionally, conventional approaches to aircraft message transmission fail to account for differences in transmission requirements between messages.

In example methods, systems and articles of manufacture disclosed herein, messages entered for transmission on an aircraft are dynamically evaluated and transmitted by a preferred network within a preferred transmission time based on network mapping, forecast data, and parameters associated with the messages. As used herein, the preferred network refers to a network that meets the requirements (e.g., a security requirement, a transmission size requirement, etc.) associated with the message and/or bundle and additionally meets the most preferences (e.g., a cost threshold preference, a network reliability preference, etc.) associated with the message and/or bundle, relative to other networks. In some examples, the preferred network can be utilized as a target network for message transmission. Additionally, as used herein, the preferred transmission time is a time that can serve as a target transmission time to optimize for transmission cost, message size, and/or any other factors (e.g., based on customer preferences, etc.). In some examples, messages are analyzed to determine a maximum allowable delay period and/or a preferred transmission time associated with the messages. Further, in some examples, networks are continually evaluated to determine availability (e.g., via pinging the networks, etc.) and other characteristics associated with the networks (e.g., congestion, costs, etc.). In such examples, the availability and other characteristics associated with networks can further be transmitted to a ground-based or network-based system to generate network maps and information useful for forecasting of future network availability for aircraft.

In some examples, the messages to be transmitted are bundled based on satisfaction of one or more compatibility criteria (e.g., representing compatibility for two messages to be transmitted in one bundled message, etc.). The compatibility criteria can include a security requirement, a message type, a message destination, and/or any other considerations. For example, a message with a high security requirement (e.g., requiring a high level of encryption, a very secure network, etc.) can have a compatibility criterion for bundling which specifies that messages in a bundle must have at least the same, or a higher, security requirement for the message to be added to the bundle. In some examples, some or all of the messages can be transmitted at a delayed time prior to the maximum allowable delay time. In some examples, a dynamic analysis of network availability can combine forecast data including probabilities of network availability with information regarding current network availability to decide whether a message (e.g., a message bundle, etc.) should be transmitted now or at a future time. For example, current network availability data can be compared with a forecast of network availability that predicts at least what networks will be or are likely to be available throughout the remainder of a flight (e.g., based on flight plan, predicted flight path, network information, etc.). In such an example, a decision is made as to whether the forecast indicates that a preferred network will become available within the preferred delay time or within the maximum allowable delay time of the message. The example methods, systems, and articles of manufacture therefore act as an "honest" message broker aboard the aircraft, distributing messages strategically via preferred networks based on a variety of factors, including cost minimization. In some examples, the transmission of a message further includes compression of the message bundle and encryption of the bundle based on the security requirements of the messages included in the bundle.

Example methods, systems and articles of manufacture disclosed herein further include techniques to utilize data from aircraft regarding network availability and associated characteristics to generate network maps and information useful for forecasting of network availability by aircraft.

In contrast with conventional approaches to process and transmit messages on an aircraft, the techniques disclosed herein enable an improved message transmission scheme, facilitating transmission of messages on networks that provide low cost transmission while still meeting message requirements and transmitting the messages within maximum allowable delay times. Similarly, the techniques disclosed herein enable a highly configurable dynamic message evaluation and network selection system wherein an operator can configure parameters regarding message types, network preferences, requirements, and/or other parameters. Further, the techniques disclosed herein enable intelligent network selection based on data gathered by aircraft pertaining to network availability. This data is assembled into network maps and broadcast to aircraft to provide network availability forecasts for use in predicting network availability along a flight path, thereby enabling intelligent message processing that provides substantial cost savings compared to conventional methods.

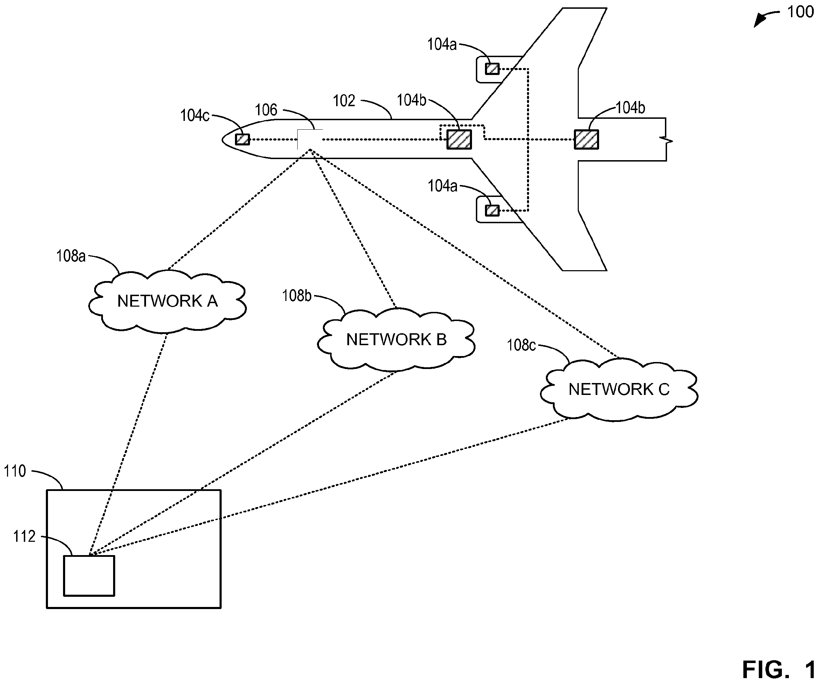

FIG. 1 is a schematic illustration of an example system constructed in accordance with the teachings of this disclosure for dynamic network evaluation and network selection. The example system 100 includes an example aircraft 102 including example message generating components 104a, 104b, 104c and an example onboard computing device 106. The example onboard computing device 106 communicates via one or more example networks 108a, 108b, 108c which transmit messages to an example ground-based facility 110. The example ground-based facility 110 includes an example ground-based computing device 112 for generating network maps.

The example aircraft 102 of the illustrated example of FIG. 1 is an aircraft equipped with components to enable the entry and transmission of messages. In some examples, the aircraft 102 can be a commercial jet, and includes equipment such as message generating components 104a, 104b, 104c and an onboard computing device 106. The example aircraft 102 can communicate, via its equipment, with one or more example networks 108a, 108b, 108c, and the example ground-based facility 110.

The example message generating components 104a, 104b, 104c of the illustrated example of FIG. 1 are equipment on the aircraft that can output a message. The example message generating components 104a are engine sensors that can output messages pertaining to operational performance (e.g., speed, operating time, load, etc.), external conditions (e.g., temperature, wind speed, humidity, turbulence, etc.), maintenance conditions (e.g., part damage or failure alerts, regular maintenance alerts, etc.), etc. In some examples, the message generating component 104a transmits a message from an engine component indicating an alert condition (e.g., the temperature is increasing, pressure is failing, a part has failed, etc.) to be communicated to a ground-based system. In some examples, the example ground-based system may subsequently communicate a response (e.g., a corrective action for the component, a pilot instruction, etc.) back for the engine component and/or associated system. The example message generating components 104b are flight attendant stations, wherein flight attendants or other personnel on the aircraft can enter a message for transmission, for example. In some examples, such flight attendant stations can additionally generate and enter messages independent of a manual entry (e.g., a message requesting a meal restocking based on a certain amount of time until a next scheduled flight, as calculated by the station, etc.). The example message generating station 104c is a cockpit message entry station. The cockpit message entry station can enter manually input messages (e.g., from a pilot, etc.) as well as generate messages for transmission based on any factor relevant to the aircraft (e.g., an aircraft equipment condition, a location, a flight path, etc.). The message generating components 104a, 104b, 104c include equipment that can generate messages for transmission from the aircraft 102, such as sensors, systems computers, etc.

The example onboard computing device 106 can perform dynamic network evaluation and network selection. In some examples, the onboard computing device 106 is a router. The example onboard computing device 106 can be any hardware computing platform with processing, storage, and connectivity capabilities to receive and send data. The example onboard computing device 106 receives messages from the message generating stations 104a, 104b, 104c that are to be transmitted via one of the networks 108a, 108b, 108c. The example computing device 106 can receive information from the ground-based computing device 112 including network availability maps, enabling the onboard computing device 106 to generate a forecast of network availability and other parameters relating to network availability. In some examples, the computing device 106 communicates with networks (e.g., pings networks, etc.) to determine network availability and other parameters and transmits this information to the ground-based computing device 112 to include in the network availability maps. In some examples, the onboard computing device 106 uses forecasts of network availability and other parameters to determine a target network for a particular message. In some examples, the onboard computing device 106 analyzes messages received from the message generating stations 104a, 104b, 104c to determine a maximum allowable delay value appropriate for individual messages. In some examples, the onboard computing device 106 determines that messages have similar requirements and meet a compatibility criterion for bundling. In such examples, the onboard computing device 106 can bundle the messages and transmit the individual messages as a single bundled message. The example computing device 106 can perform additional tasks to analyze messages, analyze networks, and/or transmit messages.

The example networks 108a, 108b, 108c of the illustrated example of FIG. 1 are networks that can transmit air-to-ground and/or ground-to-air messages. In some examples, there can be any number of available networks 108a, 108b, 108c that the computing device 106 is able to communicate with. In some examples, the example networks 108a, 108b, 108c have distinct characteristics with respect to numerous factors such as cost, allowable message sizes, allowable message types, network traffic, locations of availability, etc. The example networks 108a, 108b, 108c can be Aircraft Communications Addressing and Reporting System (ACARS) networks, Wi-Fi networks, SATCOM networks, Future Air Navigation System (FANS) networks, and/or any other type of networks. In some examples, two separate networks (e.g., 108a, 108b) can be the same type of network (e.g., a SATCOM network, a FANS network, etc.), but have distinct characteristics and/or are provided by different service providers. In some examples, the example networks 108a, 108b, 108c are available at different locations. For example, the example network 108a can be available at a different location along a flight path compared to the example network 108b. The example networks 108a, 108b, 108c can have different availabilities and capabilities at different locations. The example networks 108a, 108b, 108c can additionally or alternatively transmit different types of communications (e.g., sensor alerts, maintenance alerts, passenger medical alerts, air traffic control messages, etc.). The example networks 108a, 108b, 108c can additionally or alternatively have different available bandwidth for communications, which can additionally vary based on location and/or time. The example networks 108a, 108b, 108c can additionally or alternatively have different levels of security (e.g., levels of encryption, etc.). The example networks 108a, 108b, 108c can have similarities and/or differences with respect to any parameter.

The example ground-based facility 110 of the illustrated example of FIG. 1 is a facility that receives messages from aircraft. In some examples, the ground-based facility 110 can receive a message via any one or more of the networks 108a, 108b, 108c from components on the aircraft 102. In some examples, the ground-based facility 110 is a facility associated with an airport. The ground-based facility 110 can be any location that can receive messages from aircraft communicated via the networks 108a, 108b, 108c. In some examples there can be multiple ground-based facilities 110 (e.g., an air traffic control facility, a maintenance facility, a commercial airline management facility, etc.) with which the aircraft 102 communicates.

The example ground-based computing device 112 of the illustrated example of FIG. 1 is a device that can receive network availability data and generate network maps. In some examples, the ground-based computing device 112 can receive data pertaining to parameters associated with the network availability data (e.g., a location where the data was collected, a weather condition when the data was collected, a traffic condition when the data was collected, etc.). Such data can additionally be referred to as sensitivity factors, as they can be used as modifiers to determine the reliability and/or applicability of network reliability data (e.g., a network that has poor availability during a storm can have had poor availability due to the weather at the time, not due to the location, etc.). In some examples, the ground-based computing device 112 can modify a weight or representative importance of network availability data based on the sensitivity factors. The ground-based computing device 112 can store network availability data in a common storage location (e.g., a database, etc.) and/or can store network availability data with relevant similar data (e.g., network availability data pertaining to the same flight path, etc.). In some examples, the ground-based computing device 112 can be implemented as multiple devices, or can be implemented partially or entirely as software. In some examples, the ground-based computing device 112 additionally broadcasts or transmits network mapping data to aircraft to enable forecasting of network availability along a flight path or at any location. In some examples, the ground-based computing device 112 receives data from aircraft via one or more of the networks 108a, 108b, 108c while the aircraft are in flight. In some examples, the ground-based computing device 112 can receive data from aircraft when the aircraft land and/or at regular intervals.

In operation, the aircraft 102 communicates messages using message generating components 104a, 104b, 104c that enter messages for transmission into an onboard computing device 106. The onboard computing device 106 then transmits the messages using one or more networks 108a, 108b, 108c to the ground-based facility 110 where messages are received. Data pertaining to network availability is additionally transmitted to the ground-based computing device 112 within the ground-based facility for use in generating network maps.

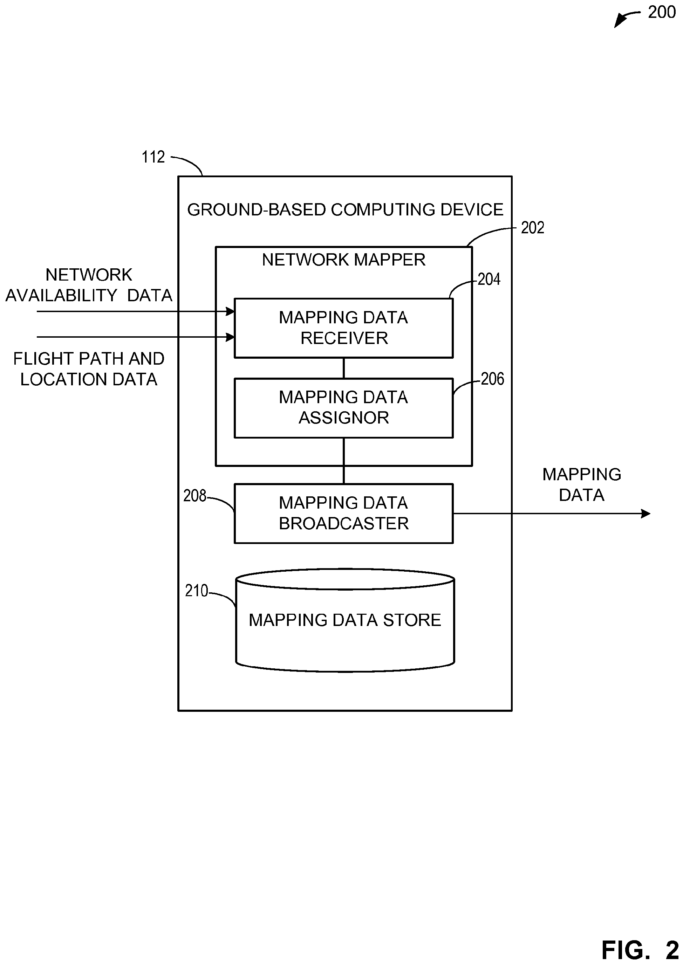

FIG. 2, which does not fall within the scope of the claims, is a block diagram showing an example implementation of the ground-based computing device 112 of FIG. 1. The example ground-based computing device 112 includes a network mapper 202. The network mapper 202 includes a mapping data receiver 204 and a mapping data assignor 206. The example ground-based computing device 112 additionally includes a mapping data broadcaster 208 and a mapping data store 210.

The example network mapper 202 of the illustrated example of FIG. 2 can receive network availability data and process it such that is it is analyzed and stored in a format useful for future broadcasting to aircraft. The example network mapper 202 can receive any relevant data for network mapping. In some examples, the network mapper 202 receives metadata including current location data for the aircraft transmitting the data, flight path data for the aircraft, network availability data, and various sensitivity factors pertaining to the network availability data (e.g., weather conditions, network traffic, etc.). In some examples, the network mapper 202 stores the network availability data in a general network map storage location where data from a plurality of aircraft is stored. In some examples, the network mapper 202 processes this data into a more usable format. For example, the network mapper 202 can first store the data and then perform processing steps to make the data more useful or readily accessible to aircraft performing dynamic network selection. In some examples, the network mapper 202 can incorporate the network availability data into a network map pertaining to the current flight path. In some examples, the network mapper 202 can incorporate the network availability data into other flight paths that traverse a similar area as indicated by the location data from the aircraft. In some examples, the network mapper 202 processes data in real time (or substantially real time given a data processing, transmission, storage, and/or retrieval delay) and subsequently broadcasts it to aircraft to make immediate use of the data. The example network mapper 202 can, however, receive network availability data at regular intervals, or during ground-based aircraft transmissions (e.g., when the aircraft is not in service, etc.) and similarly can broadcast mapping data at regular intervals.

The example mapping data receiver 204 of the illustrated example of FIG. 2 can receive network availability data, location data, and flight path data from aircraft. In some examples, the mapping data receiver 204 receives the network availability, location, and flight path data via a network. In some examples, the network availability data is transmitted as it is collected during a flight. In some examples, the network availability data is transmitted at a later time, such as during a time when the aircraft is grounded and not in service. In some examples, the network availability data received by the mapping data receiver 204 can have more granularity than a simple indication as to whether the network is available (e.g., the data can include a signal strength, a transmission speed, etc.) which can be useful for inclusion in the network map to enable dynamic selection of a preferred network.

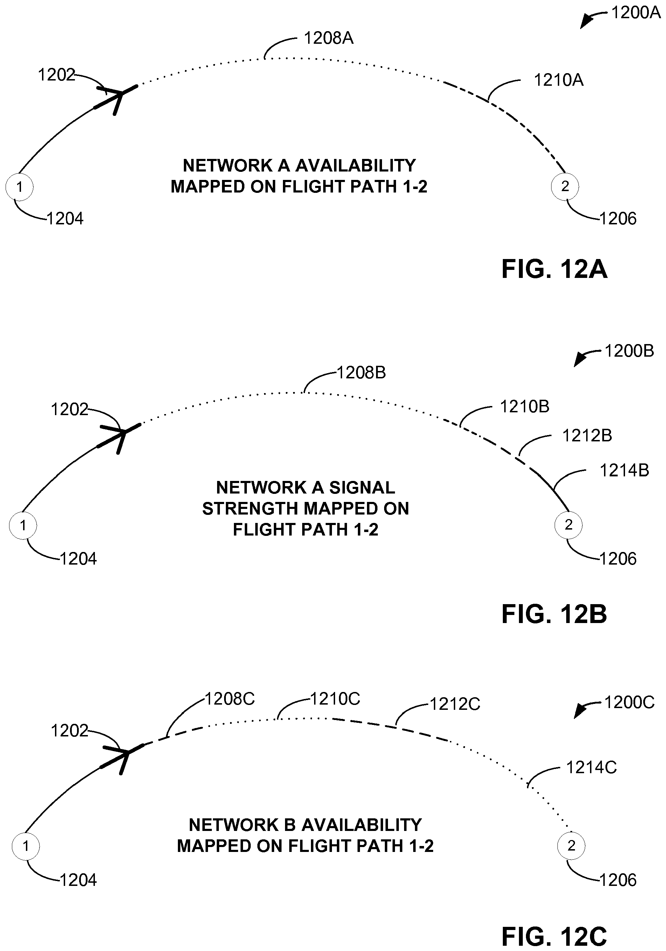

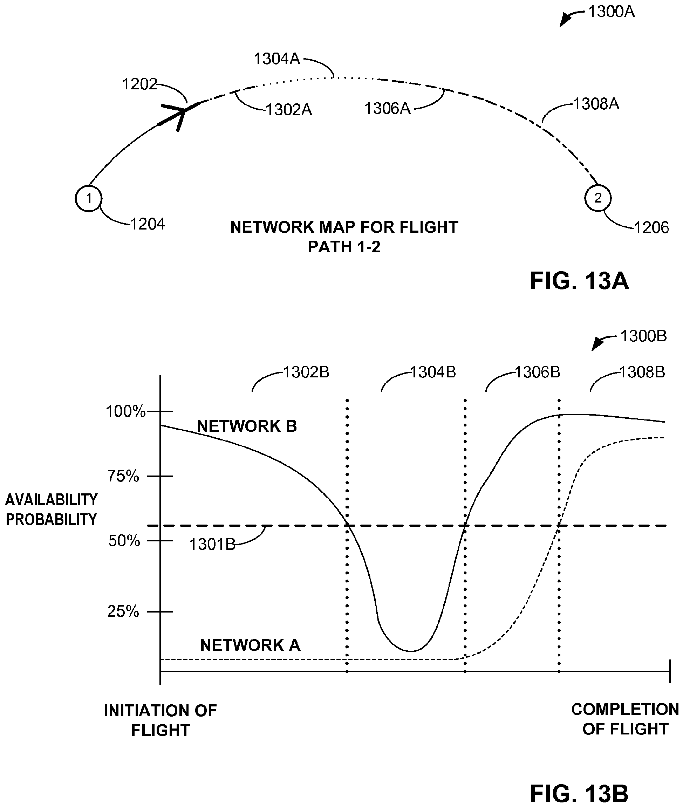

The example mapping data assignor 206 of the illustrated example of FIG. 2 analyzes the data received by the mapping data receiver 204 and stores the mapping data to appropriate locations for inclusion in network maps. In some examples, one general location is used to store all mapping data (e.g., a central database, etc.). In some examples, the mapping data assignor 206 incorporates network availability data into a network map pertaining to the specific flight path of the aircraft that transmitted the data. In some examples, the mapping data assignor 206 incorporates any data (e.g., sensitivity factors, location data, etc.) that is determined to be useful into a network map. In some examples, the network map represents data collected from one or more aircraft along a flight path that can be used by aircraft traversing the flight path in the future for predicting network availability, and predicting various parameters surrounding network communications (e.g., an expected traffic for the network at a location and/or time, an expected network reliability, an effect of weather and/or other sensitivity factors on network availability, etc.). Example representations of network maps are provided in FIGS. 12A-C and 13A-B. In some examples, the mapping data assignor 206 incorporates network availability data into an overall database including network availability data and corresponding locations and sensitivity factors for the network availability data. The example mapping data assignor 206 can additionally incorporate the network availability data into flight paths that include locations substantially similar (e.g., within 5 nautical miles, etc.) to the location where the network availability data was collected.

The example mapping data broadcaster 208 of the illustrated example of FIG. 2 can broadcast relevant network maps to aircraft. In some examples, the mapping data broadcaster 208 immediately broadcasts updated versions (or entirely new versions) of network maps after mapping data has been received by the mapping data receiver 204 and processed by the mapping data assignor 206. In such examples, the network map can change in real-time on an aircraft based on network availability data incorporated into network maps from other aircraft. In some examples, the mapping data broadcaster 208 can transmit the network maps to aircraft at specified times (e.g., immediately before a flight takes off, etc.). In some examples, the mapping data broadcaster 208 transmits a network map specific to the flight path for a given aircraft. In some examples, the mapping data broadcaster 208 transmits the entire network map, enabling the aircraft to analyze the map to determine relevant data along the flight path. In some examples, the mapping data broadcaster 208 transmits a partial network map expanding outward from the aircraft a specified range (e.g., 200 nautical miles, etc.), thus enabling a useful network map without necessarily requiring knowledge of the aircraft's flight path. In some examples, the mapping data broadcaster 208 utilizes the same networks that are used for message transmission (e.g., the example networks 108a, 108b, 108c of the illustrated example of FIG. 1) to transmit network map data. In some examples, the mapping data broadcaster 208 can transmit data representative of a forecast of network availability in addition to, or alternatively to, a complete network map. In such examples, the forecast can be an analyzed subset of the network map that is relevant to the specific network selection tasks currently executing on the aircraft. In such examples, the onboard computing device of the aircraft can work in substantially real-time to request network mapping data pertinent to a specific decision (e.g., will a lower cost network be available in the next 10 minutes?). The example mapping data broadcaster 208 can utilize any methodology or techniques to transmit network mapping data to aircraft for use.

The example mapping data store 210 of the illustrated example of FIG. 2 is used to store network availability data. In some examples, the mapping data store 210 stores both network availability data received from aircraft as well as processed data that has been assigned to network maps. The mapping data store 210 can be implemented by a volatile memory (e.g., a Synchronous Dynamic Random Access Memory (SDRAM), Dynamic Random Access Memory (DRAM), RAMBUS Dynamic Random Access Memory (RDRAM), etc.) and/or a non-volatile memory (e.g., flash memory, etc.). The mapping data store 210 can additionally or alternatively be implemented by one or more double data rate (DDR) memories, such as DDR, DDR2, DDR3, mobile DDR (mDDR), etc. The mapping data store 210 can additionally or alternatively be implemented by one or more mass storage devices such as hard disk drive(s), compact disk drive(s) digital versatile disk drive(s), etc. While, in the illustrated example, the mapping data store 210 is illustrated as a single database, the mapping data store 210 can be implemented by any number and/or type(s) of databases. Furthermore, the data stored in the mapping data store 210 can be in any data format such as, for example, binary data, comma delimited data, tab delimited data, structured query language (SQL) structures, etc.

In operation, the example network mapper 202 receives network availability data via the example mapping data receiver 204. The example mapping data assignor 206 then processes the network availability data into a useful network map or other useful format for dynamic network evaluation and selection. The example mapping data broadcaster 208 then broadcasts the network map to aircraft for use in dynamic network evaluation and selection. The example mapping data store 210 is used to store both network availability data that is received by the example network mapper 202, as well as processed network maps from the example mapping data assignor 206.

While an example manner of implementing the ground-based computing device of FIG. 1 is illustrated in FIG. 2, one or more of the elements, processes and/or devices illustrated in FIG. 2 can be combined, divided, re-arranged, omitted, eliminated and/or implemented in any other way. Further, the example network mapper 202, the example mapping data receiver 204, the example mapping data assignor 206, the example mapping data broadcaster 208, the example mapping data store 210 and/or, more generally, the example ground-based computing device 112 of FIG. 2 can be implemented by hardware, software, firmware and/or any combination of hardware, software and/or firmware. Thus, for example, any of the example the example network mapper 202, the example mapping data receiver 204, the example mapping data assignor 206, the example mapping data broadcaster 208, the example mapping data store 210 and/or, more generally, the example ground-based computing device 112 of FIG. 2 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, the example network mapper 202, the example mapping data receiver 204, the example mapping data assignor 206, the example mapping data broadcaster 208, the example mapping data store 210 is/are hereby expressly defined to include a non-transitory computer readable storage device or storage disk such as a memory, a digital versatile disk (DVD), a compact disk (CD), a Blu-ray disk, etc. including the software and/or firmware. Further still, the example ground-based computing device 112 of FIG. 2 can include one or more elements, processes and/or devices in addition to, or instead of, those illustrated in FIG. 2, and/or can include more than one of any or all of the illustrated elements, processes and devices.

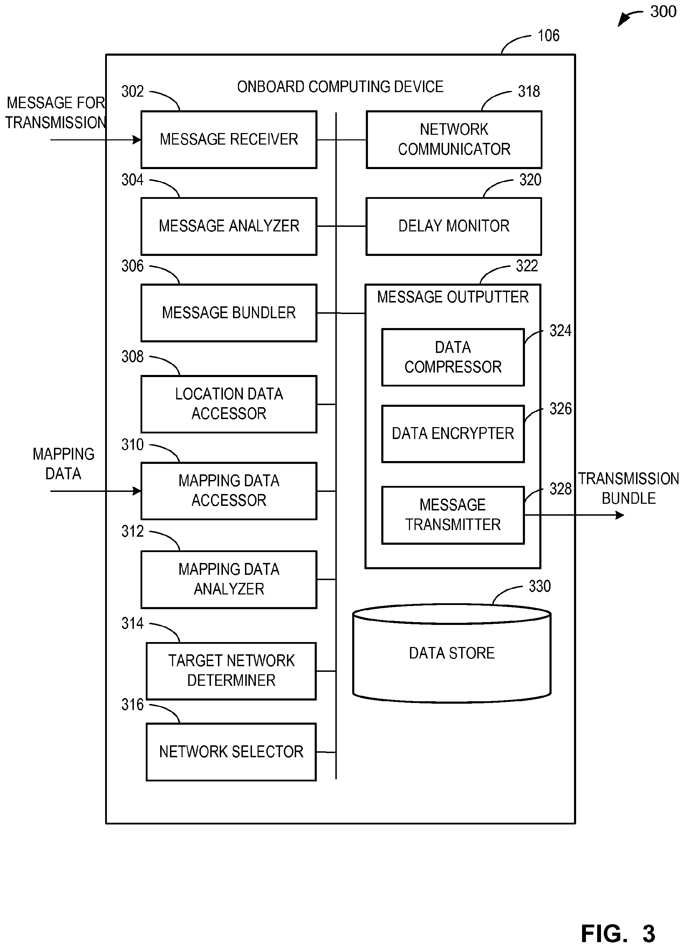

FIG. 3 is a block diagram showing an example implementation of the onboard computing device 106 of FIG. 1. The example onboard computing device 106 includes an example message receiver 302, an example message analyzer 304, an example message bundler 306, an example location data accessor 308, an example mapping data accessor 310, an example mapping data analyzer 312, an example target network determiner 314, an example network selector 316, an example network communicator 318, an example delay monitor 320, and an example message outputter 322. The example message outputter 322 includes an example data compressor 324, an example data encrypter 326, and an example message transmitter 328. The example onboard computing device 106 also includes an example data store 330.

The example message receiver 302 of the illustrated example of FIG. 3 receives messages entered into systems on an aircraft for transmission to a ground-based facility. The example message receiver 302 can receive messages from any message generating components (e.g., sensors, navigation systems, flight attendant stations, manual entry, etc.). In some examples, the messages can be generated from a component of the onboard computing device 106 itself. In some examples the message receiver 302 is configured to receive messages and forward them to the example message analyzer 304. In some examples, the example message receiver 302 is an antenna, or other hardware that can receive signals. In some examples, the message receiver 302 can be implemented, at least partially, as software.

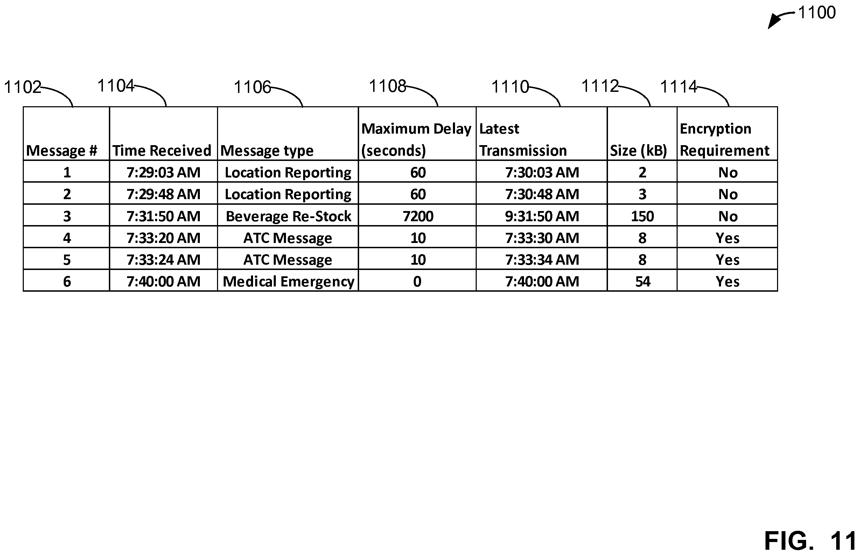

The example message analyzer 304 of the illustrated example of FIG. 3 can process the messages received by the message receiver 302 to determine characteristics associated with the messages. For example, the message analyzer 304 can determine requirements (e.g., a maximum allowable delay value, a security requirement, etc.) associated with the messages. The example message analyzer 304 can analyze the contents (e.g., the text, meaning, etc.) of a message, the format (e.g., a file format, size, etc.) and/or any other parameter (e.g., metadata, etc.) of the message to determine a maximum allowable delay value for the message. The example message analyzer 304 determines a maximum allowable delay time, corresponding to the maximum allowable delay value added to the time at which the message was received, representing a latest time that the message can be transmitted. In some examples, the maximum allowable delay can be determined based on a predefined list of delay values associated with a type of message. In some examples, the message analyzer 304 can determine various parameters pertaining to the messages, such as a time received, a message type, a size, etc. The message analyzer 304 can also determine various requirements of the message, including a security requirement, a reliability requirement, etc. As used herein, message "requirements" are parameter values that must be adhered to in association with transmission of the message. For example, if a message has a security requirement specifying that encryption is required, the message must be transmitted using encryption. As used herein, message "preferences" are parameter values that are preferable over other possible parameter values. For example, a message might have a preference that it be transmitted at a cost lower than a specified threshold. In some such examples, the preference can be a customer preference. Message preferences can be any parameters that are preferred (e.g., to optimize for a low cost transmission, to optimize for security, to optimize for reliability, etc.) but are not necessarily required. In some examples, the message analyzer 304 can store the messages in a look-up table and/or add the messages to a queue, as depicted in the example table 1100 of FIG. 11.

In some examples, the message analyzer 304 is configurable to enable the message analyzer 304 to recognize specific message types and/or to assign maximum allowable delay values based on configured rules. For example, the example message analyzer 304 can be configured to recognize that a message including the word "medical" is a high priority message, and should be transmitted as an emergency transmission. In some examples where a message is identified as an emergency transmission, the message analyzer 304 can change the processing steps (e.g., skip bundling, skip network forecasting, etc.) associated with the message to expedite transmission of the message. In examples where a message type is determined (e.g., a received message is matched with a message type as defined by preconfigured rules, etc.), the example message analyzer 304 can additionally retrieve and store a list of requirements and preferences pertaining to network selection relevant to the message. After determining the message type, the example message analyzer 304 can retrieve requirements and preferences pertaining to that message type, such as a maximum allowable delay time (a requirement), a preferred delay transmission time (a preference), a preferred network for the message type (a preference), etc. For example, in the case of the message including the word "maintenance," that is subsequently defined to be a maintenance alert message, the example message analyzer 304 can retrieve requirements and preferences specific to maintenance alert messages, such as a security requirement, a maximum allowable delay time, a preferred transmission delay time, a preferred network list for maintenance alert messages (e.g., a highly reliable, high bandwidth network, etc.) to be stored, associated, or otherwise linked with the message. In some examples, machine learning can be implemented to enable the machine analyzer 304 to more effectively determine maximum allowable delay values for messages based on previously analyzed messages.

In some examples, the message analyzer 304 can assign a message a specified transmission time and/or can be specified to only transmit when on the ground. In such examples, the example network selector 316 can transmit such messages at the specified transmission time for the message based on the preferred available network at the time of transmission.

In some examples, the message analyzer 304 can analyze a message not only when it is newly received, but at other times prior to transmitting the message. In such examples, the message can be a bundle, as opposed to a message that has not yet been processed by the example message bundler 306.

In some examples, the example message analyzer 304 can receive information corresponding to a pilot override of a message transmission. For example, a message generating component can generate a message corresponding to a sensor output (e.g., a non-critical maintenance alert, etc.) which can be received by the example message receiver 302. In some examples, the pilot and/or other personnel on the aircraft can have an option to transmit the message or to override (e.g., ignore, cancel, etc.) the message. In some examples, the pilot and/or other personnel have the option to set a message type, a maximum allowable delay time, and/or any other parameter associated with a message in order to manually adjust the transmission of the message.

The example message bundler 306 of the illustrated example of FIG. 3 can create and modify packages of messages (e.g., bundles, etc.). As used herein, a bundle refers to a package of messages including one or more messages. Specifically, a bundle is one or more messages previously processed by the example message bundler 306. In examples wherein a bundle includes only one message (e.g., a newly created bundle), the bundle is continually compared with newly received messages to determine if the new message can be added to the bundle. In some examples, bundling may not be enabled, and messages may only be handled as individual messages. In such examples, the remaining techniques as taught herein can still be performed, understanding that the same techniques can be performed on individual messages that are not bundled.

In some examples, for messages received by the example message receiver 302 and processed by the example message analyzer 304, a determination is made as to whether the message can be bundled with any other currently processing (e.g., not yet transmitted, etc.) message. In some examples, this determination can be made by the example message analyzer 304. In some examples, the message bundler 306 compares parameters of newly entered messages with current bundles to determine if the existing bundles meet a compatibility criterion or compatibility criteria with the message. In response to the compatibility criterion or criteria being met, the message can be added to the bundle. In some examples, the message bundler 306 has one or more compatibility criteria that it utilizes to determine if a message can be added to an existing bundle. For example, one compatibility criterion can be that the security requirement of the new message is not higher than the current security requirement of the bundle. In such an example, a new message that has a high security requirement will not be added to a bundle of low security requirement messages that can otherwise be possible to send over a lower cost, lower security network. In some examples, the message bundler 306 only adds messages to a bundle if all requirements match. In some examples, the message bundler 306 only adds messages to a bundle if all requirements match and a threshold quantity of preferences match as well. In some examples, the message bundler 306 can add a message to the bundle if the requirements of the bundle are met, and subsequently determines new preferences for the bundle based on one or more of the messages included in the bundle (e.g., by determining a preferred transmission network and preferred transmission time based on characteristics of the messages included in the bundle, etc.). The example message bundler 306 can utilize any parameters or characteristics associated with a new message, as determined by the example message analyzer 304, to determine if the new message is compatible with an existing bundle.

In some examples, in response to one or more compatibility criteria not being met between a new message and an existing bundle, a new bundle can be created including the new message. The example message bundler 306 can, upon creating a new bundle for a new message, assign requirements to the new bundle that are equal to the requirements of the new message. For example, the message bundler 306 can assign a maximum allowable delay value to the new message based on the maximum allowable delay of the new message. In some examples, the message bundler 306 can assign any characteristics (e.g., preferences, etc.) to the bundle as being equal to the same characteristics of the new message. In some examples wherein one or more compatibility criteria are satisfied and the new message is to be added to an existing compatible bundle, the maximum allowable delay value of the bundle can be updated after the addition of the new message based on the messages in the bundle. In some examples, the message bundler 306 can determine the maximum allowable delay time of the bundle to be equal to the soonest maximum allowable delay time of the messages included in the bundle. In some examples, a message is only added to a bundle if its requirements are the same as the bundle, and thus once a bundle is created with specific requirements, these requirements do not change throughout the processing time of the bundle.

The example location data accessor 308 of the illustrated example of FIG. 3 can access location data pertaining to a current location of the aircraft. In some examples, the location data accessor 308 can be in communication with, or can itself include, a positioning system (e.g., a global positioning system, location, etc.). In some examples, the example location data accessor 308 receives location information to provide to the example mapping data accessor 310 to enable the mapping data accessor 310 to retrieve an appropriate network map. In some examples, the location data accessor 308 can additionally transmit location data, along with network availability data from the network communicator 318 to a ground-based computing device for use in generating network maps.

The example mapping data accessor 310 of the illustrated example of FIG. 3 receives network maps and associated network availability information for use by the example mapping data analyzer 312 in determining network availability forecasts. The example mapping data accessor 310 can receive mapping data broadcast by the example mapping data broadcaster 208 of FIG. 2. In some examples, the example mapping data accessor 310 requests mapping data based on the location data accessed by the example location data accessor 308. In some examples, the example mapping data accessor 310 can send a request for mapping data corresponding to the location data and find that the mapping data is not available. In such an example, the example mapping data accessor 310 can send a request for mapping data based on other parameters (e.g., a flight path, a current location and current trajectory, etc.). In some examples, the mapping data accessor 310 can receive mapping data that pertains to a nearest available location where mapping data is available, or that has other similar parameters (e.g., similar network equipment, similar weather, etc.) to the current parameters reported in the request for mapping data. In some examples, the mapping data accessor 310 accesses a central network map, stored on the aircraft, accessed via a network, or accessed from a ground-based facility. In some examples, the mapping data accessor 310 matches conditions of the aircraft with conditions (e.g., metadata associated with weather conditions, altitude, etc.) associated with available network maps.

In some examples, the mapping data accessor 310 can request, receive or otherwise access mapping data at regular intervals throughout a flight. In some examples, the mapping data accessor 310 can access mapping data prior to a flight based on a known flight path. The example mapping data accessor 310 can receive mapping data via any network or interface.

The example mapping data analyzer 312 of the illustrated example of FIG. 3 analyzes mapping data accessed by the mapping data accessor 310. The example mapping data analyzer 312 generates a forecast of network availability based on the network map. In some examples, the example mapping data analyzer 312 can generate a forecast of signal strength in addition to, or alternatively to, a forecast of network availability. For example, the mapping data analyzer 312 can determine, based on the network map, that a network will become available, and/or will have a certain signal strength at a specific time and/or location. In some examples, the mapping data analyzer determines a forecast of networks that will be available within a preferred delay transmission time and/or a maximum allowable delay transmission time associated with the message. In some examples, the mapping data analyzer 312 can determine a probability distribution representative of the likelihood of a network becoming available at times and/or locations throughout a flight. The example mapping data analyzer 312, in generating a network forecast, can account for sensitivity factors included in the mapping data. For example, if the mapping data has been generated based on a low number of samples (e.g., one flight, etc.) that were collected a long time ago (e.g., over a year ago, etc.), the mapping data can be less reliable. In an example, the mapping data analyzer 312 can assign a lower weight to the reliability of this mapping data and generate a more conservative forecast (e.g., a lower probability that a network will become available, etc.) based on the limited, outdated data. The example target network determiner 314 can utilize this forecast accordingly to make decisions on a target network based on the forecast and associated sensitivity factors.

The example mapping data analyzer 312 can map a variety of parameters included in the mapping data. The example mapping data analyzer 312 can generate a forecast for any parameter based on a location associated with an aircraft's flight path and/or a time associated with an aircraft's flight path. For example, the mapping data analyzer 312 can provide, based on the mapping data, a forecast of traffic that is expected on a given network. In such an example, if a certain time of day (e.g., 6:00PM, etc.) is known to have higher traffic on a certain network, the forecast generated by the example mapping data analyzer 312 can reflect this. Similarly, if a certain location (e.g., around a large airport, etc.) is known to generally have high traffic, the forecast generated by the mapping data analyzer 312 can reflect this.

The example target network determiner 314 of the illustrated example of FIG. 3 utilizes the analysis (e.g., the forecast, the network map, etc.) generated by the mapping data analyzer 312 to determine a target network for transmission of a bundle. In some examples, the target network is the preferred network for the bundle, while in some examples the target network is a network which meets the requirements of the bundle. In some examples the target network selected optimizes transmission for the lowest cost. The example target network determiner 314 can utilize forecast data to identify a target network that will be available within a preferred transmission time and/or the maximum allowable delay period associated with the bundle that meets requirements of messages included in the bundle at the lowest possible cost. The example target network determiner 314 can also re-evaluate bundles based on updated information (e.g., a change in a parameter of a bundle, etc.) and update the target network for the bundle.

In some examples, the target network determiner 314 analyzes networks that are forecast to be available within a preferred transmission time and/or a maximum allowable transmission time, and performs comparison of parameters of the networks with parameters associated with the bundle (e.g., comparison of preferences and requirements, etc.). In some examples, the target network determiner 314 first checks whether a preferred network associated with the message is predicted to be available within a preferred transmission time associated with the message. In response to the preferred network being predicted to be available within the preferred transmission time, the target network determiner 314 selects the preferred network as the target network. The target network determiner 314 additionally selects a preferred transmission time. In some examples, the preferred transmission time is optimized to enable a maximum time for bundling (e.g., by selecting the latest time within the preferred transmission time at which the preferred network is available, etc.).

In response to the preferred network not being predicted to be available within the preferred transmission time, the example target network determiner 314 can determine if the preferred network is predicted to be available within the maximum allowable transmission time. In some such examples, when the preferred network is forecast to be available within the maximum allowable transmission time, the target network determiner 314 selects the preferred network as the target network and selects a target transmission time.

However, if the preferred network is not forecast to be available within the maximum allowable transmission time, the example target network determiner 314 can determine if a network that meets the requirements of the bundle (a network that may not necessarily meet the preferences of the bundle) is predicted to be available within the maximum allowable transmission time. If a network that meets the requirements of the bundle is predicted to be available within the maximum transmission time, such a network can be selected as the target network, and a target transmission time of predicted availability can be selected. However, if no network that satisfies the requirements of the bundle is predicted to be available within the maximum transmission time, processing can change to a different technique wherein the example network communicator 318 continually checks for a compatible network and transmits the bundle on the compatible network once it is identified as available.

In some examples, the target network determiner 314 can be configurable by an operator (e.g., an airline, a network service provider, etc.) to reflect operator preferences or requirements with respect to network selection. The example target network determiner 314 can additionally or alternatively determine a target network based on location data (e.g., latitude and longitude, a flight path, a trajectory, etc.) and/or a component that generated the message (e.g., a sensor, a pilot communication device, etc.) In some examples, the target network determiner 314 can determine a single preferred network to be the target network, as well as generate a list or ranking of alternate preferred networks. In some examples, the target network determiner 314 can be configured with a threshold at which the probability of a network becoming available within the maximum allowable delay time can be selected as the target network.

In some examples, if insufficient data is available to determine a target network (e.g., no network mapping data has been retrieved, network mapping data retrieved is not relevant, etc.), the example network selector 316 can handle the selection of a network that meets the requirements for the bundle to be transmitted, since a target network based on forecasting data cannot be determined by the example target network determiner 314. In some examples, the target network determiner 314 works in tandem with the example network communicator 318 to continually monitor network availability to determine if the target network has become available and is thus can currently transmit the bundle. The example target network determiner 314 can additionally append target network data to a message bundle (e.g., as metadata, etc.).

The example network selector 316 of the illustrated example of FIG. 3 can select a network which will be used to transmit a message bundle. In some examples, the example network selector 316 is used to make a final decision on what network will be used to transmit a message bundle. For example, the network selector 316 can work in tandem with the delay monitor 320 and the target network determiner 314 to determine if a target network for a message bundle is available at the target transmission time. In response to the target network being available at the target transmission time, the example network selector 316 selects the target network as the network for transmission. In some examples, if the target network is not available at the target transmission time, the example network communicator 318 can determine if a message that meets the requirements of the bundle is available, and the example network selector 316 can subsequently select the best available network that meets the requirements of the bundle as the network for transmission. The example network selector 316 can be configured with logic to rank currently available networks based on their suitability for transmission of a bundle to select a best network for bundle transmission in the event a target network cannot be identified or the target network does not become available at the target transmission time. In some such examples, the logic can include weights assigned to different parameters (e.g., a high weight for the network having the desired security level, a high weight for the network having the desired reliability level, etc.). In some examples, the example network selector 316 can additionally or alternatively select a network based on location data (e.g., current altitude, trajectory, latitude and longitude, etc.) and/or based on the message generating component (e.g., a type of sensor, an onboard system, etc.) from which the message originates. For example, the example network selector 316 can be configured to select different networks at different altitudes. In such an example, the example network selector 316 can be configured to preferably transmit messages at altitudes that satisfy a threshold via a first network as compared to a second network, due to the first network having improved reliability over the second network at higher altitudes. In some examples, the example network selector 316 can transmit messages originating from a specific message generating component preferably via a third network instead of a fourth network when both are available, due to the type of message having improved transmission characteristics (e.g., compatibility, reliability, etc.) on the third network. For example, the third network can be designed to transmit messages specifically of the type originating from the specific message generating component. The example network selector 316 determines the selected network for a message bundle and then passes this information to the example message outputter 322 to initiate transmission of the bundle via the selected network.

The example network communicator 318 of the illustrated example of FIG. 3 can communicate with (e.g., ping, etc.) networks to determine network availability. In some examples, the example network communicator 318 continually identifies available networks on an aircraft, and additionally determines parameters pertaining to the networks. For example, the parameters can include information pertaining to traffic on a network, a signal strength of a network, bandwidth of a network, and any other relevant parameters. The example network communicator 318 works in tandem with the example target network determiner 314 and the example network selector 316 to provide information on currently available networks. Additionally, the example network communicator 318 can communicate network availability information and parameters pertaining to the networks, along with current location information (e.g., as determined by the example location data accessor 308) to a ground-based facility for use in network mapping. In some examples, the example network communicator 318 continually transmits network availability information and associated parameters to a ground-based facility for network mapping. In some examples, the example network communicator 318 can store the network availability information onboard the aircraft and transmit the information at a specified time (e.g., at a specified interval, after landing, once a day, etc.). In some examples where the network communicator 318 communicates network availability information and associated parameters to a ground-based facility, the network communicator 318 can use any available network to transmit the information.

The example delay monitor 320 of the illustrated example of FIG. 3 monitors the amount of time since a message has been entered into the system. Additionally, the example delay monitor 320 determines if a bundle has reached its transmission time, its maximum allowable delay time, and/or its target transmission time. In some examples, the example message analyzer 304 passes the determined maximum allowable delay time to the delay monitor 320, which then begins timing the message and monitors the message and its associated bundle up until either the bundle is transmitted or reaches its maximum allowable delay time. In some examples, when the example delay monitor 320 is nearing or reaches a preferred transmission time or a maximum allowable delay time, the example delay monitor 320 can communicate with the example target network determiner 314 and the example network selector 316 to make a decision regarding a possible target network adjustment and/or a network selection to ensure the bundle is transmitted in a timely manner. The example message analyzer 304 can adjust the processing of a bundle based on information from the example delay monitor 320 that indicates the bundle has been processing for a long time (e.g., by adjusting a target transmission time to result in a faster transmission, etc.). In such an example, the example target network determiner 314 can re-evaluate the target network based on the new information.

The example message outputter 322 of the illustrated example of FIG. 3 can transmit bundles via an available network. The example message outputter 322 includes the data compressor 324, to reduce the bundle size prior to transmission, the example data encrypter 326, to satisfy a security requirement associated with the bundle, and the example message transmitter 328 for transmitting the bundle. In some examples the message outputter 322 transmits bundles in response to an indication by the network selector 316. In some examples, the message outputter 322 purges bundles if a flight is determined to have concluded. In some such examples, the message outputter 322 can transmit all messages remaining at the conclusion of a flight via a preferred network (e.g., a gatelink network, etc.).

The example data compressor 324 of the illustrated example of FIG. 3 compresses bundles prior to transmission. In some examples, the example data compressor 324 can have varying levels of compression and a message can be compressed based on a requirement or parameter associated with the bundle. In some examples, the data compressor 324 compresses the bundle using any known compression technique. In some examples, the data compressor 324 can compress the bundle to different sizes based on the network. For example, one network can allow a larger transmission without extra cost, minimizing the need for major compression on this network. In another example, a network can have a maximum individual transmission size, and the example data compressor 324 can compress the bundle to meet this maximum size requirement. In some examples, message bundles that are determined to be of lower importance by the example message analyzer 304 can utilize a more lossy form of compression, resulting in more significant compression than utilized with higher importance bundles.

The example data encrypter 326 of the illustrated example of FIG. 3 encrypts bundles based on a security requirement or preference associated with one or more messages in the bundles. In some examples, the message analyzer 304 determines a security requirement associated with the bundle, which is then utilized by the example data encrypter 326 to determine an appropriate type of encryption to utilize with a bundle. In some examples, messages with a security requirement can additionally or alternatively be transmitted over a secure network, and can or can not be encrypted prior to transmission over the secure network. In some examples, the data encrypter 326 can instead use another form of secure data preparation that is not explicitly encryption.

The example message transmitter 328 of the illustrated example of FIG. 3 can transmit a bundle via any network selected by the example network selector 316 and determined by the example network communicator 318 to be available. In some examples, the message transmitter 328 receives a bundle that has been compressed and encrypted and transmits it via a network. In some examples, a message and/or bundle requiring immediate transmission can be transmitted without compression and/or encryption.

In operation, the example message receiver 302 receives a message entered by a component on an aircraft for transmission. The example message receiver 302 passes the message to the example message analyzer 304 in order to determine characteristics of the message (e.g., requirements and preferences, etc.). The example message bundler 306 then either creates a new bundle for the message, or bundles the message with an existing bundle based on whether the message satisfies a compatibility criterion with an existing bundle. The example location data accessor 308 then utilizes location data to enable the example mapping data accessor 310 to retrieve relevant mapping data. The example mapping data analyzer 312 then analyzes the mapping data to determine a forecast of network availability and parameters associated with network availability. The example target network determiner 314 utilizes characteristics associated with the bundle to determine a target network that meets the requirements for transmission of the bundle and is forecast to be available within the maximum allowable delay time for the bundle. If possible, the example target network determiner 314 selects the target network to meet the preferences associated with the bundle, and additionally selects a target transmission time within the preferred transmission time. The example network selector 316, at the target transmission time, selects the target network to be used for transmission of the bundle, if it is available, or determines a best available network for transmission of the message. The example network communicator 318 continually and/or periodically monitors network availability to enable effective message transmission as well as provide updated mapping data information to a ground-based facility. The example delay monitor 320 monitors messages entered into the system for transmission and alerts other components when the maximum allowable delay time has been reached. Once the message is ready for transmission, the example message outputter 322 outputs the bundle, with the example data compressor 324 compressing the bundle and the example data encrypter 326 encrypting the bundle prior to the example message transmitter 328 transmitting the message on the network selected by the example network selector 316.

The example data store 330 of the illustrated example of FIG. 3 is a storage medium that can store information pertaining to messages, networks, mapping data, and any other data utilized by the onboard computing device 106. The data store 330 can be implemented by a volatile memory (e.g., a Synchronous Dynamic Random Access Memory (SDRAM), Dynamic Random Access Memory (DRAM), RAMBUS Dynamic Random Access Memory (RDRAM), etc.) and/or a non-volatile memory (e.g., flash memory). The data store 330 can additionally or alternatively be implemented by one or more double data rate (DDR) memories, such as DDR, DDR2, DDR3, mobile DDR (mDDR), etc. The data store 330 can additionally or alternatively be implemented by one or more mass storage devices such as hard disk drive(s), compact disk drive(s) digital versatile disk drive(s), etc. While in the illustrated example the data store 330 is illustrated as a single database, the data store 330 can be implemented by any number and/or type(s) of databases. Furthermore, the data stored in the data store 330 can be in any data format such as, for example, binary data, comma delimited data, tab delimited data, structured query language (SQL) structures, etc.

While an example manner of implementing the onboard computing device of FIG. 1 is illustrated in FIG. 3, one or more of the elements, processes and/or devices illustrated in FIG. 3 can be combined, divided, re-arranged, omitted, eliminated and/or implemented in any other way. Further, the example message receiver 302, the example message analyzer 304, the example message bundler 306, the example location data accessor 308, the example mapping data accessor 310, the example mapping data analyzer 312, the example target network determiner 314, the example network selector 316, the example network communicator 318, the example delay monitor 320, the example message outputter 322, the example data compressor 324, the example data encrypter 326, the example message transmitter 328, the example data store 330 and/or, more generally, the example onboard computing device 106 of FIG. 3 can be implemented by hardware, software, firmware and/or any combination of hardware, software and/or firmware. Thus, for example, any of the example the example message receiver 302, the example message analyzer 304, the example message bundler 306, the example location data accessor 308, the example mapping data accessor 310, the example mapping data analyzer 312, the example target network determiner 314, the example network selector 316, the example network communicator 318, the example delay monitor 320, the example message outputter 322, the example data compressor 324, the example data encrypter 326, the example message transmitter 328, the example data store 330 and/or, more generally, the example onboard computing device 106 of FIG. 3 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, the example message receiver 302, the example message analyzer 304, the example message bundler 306, the example location data accessor 308, the example mapping data accessor 310, the example mapping data analyzer 312, the example target network determiner 314, the example network selector 316, the example network communicator 318, the example delay monitor 320, the example message outputter 322, the example data compressor 324, the example data encrypter 326, the example message transmitter 328, the example data store 330 is/are hereby expressly defined to include a non-transitory computer readable storage device or storage disk such as a memory, a digital versatile disk (DVD), a compact disk (CD), a Blu-ray disk, etc. including the software and/or firmware. Further still, the example onboard computing device 106 of FIG. 3 can include one or more elements, processes and/or devices in addition to, or instead of, those illustrated in FIG. 3, and/or can include more than one of any or all of the illustrated elements, processes and devices.

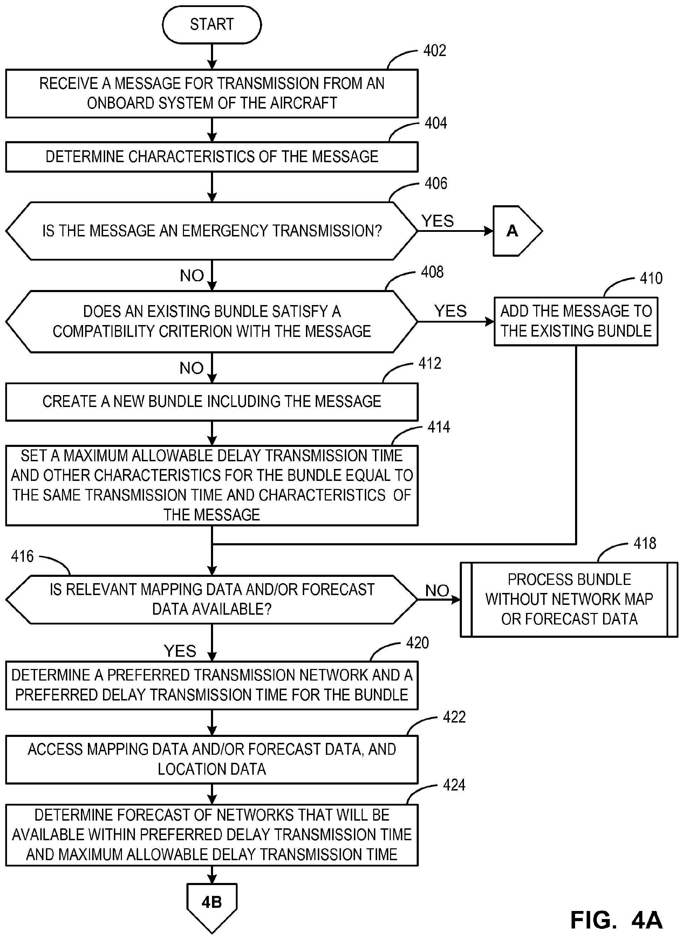

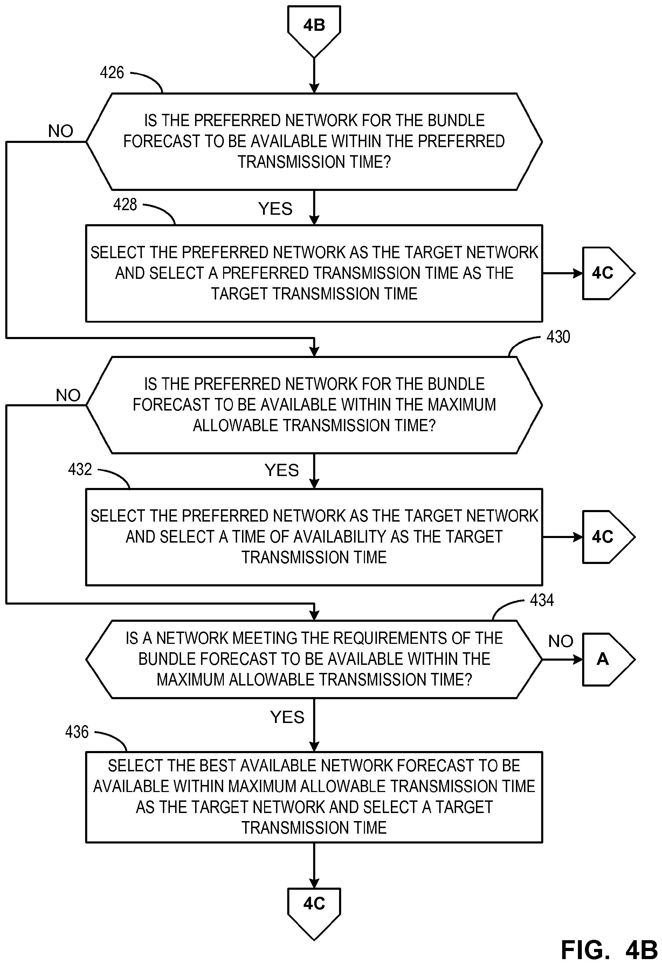

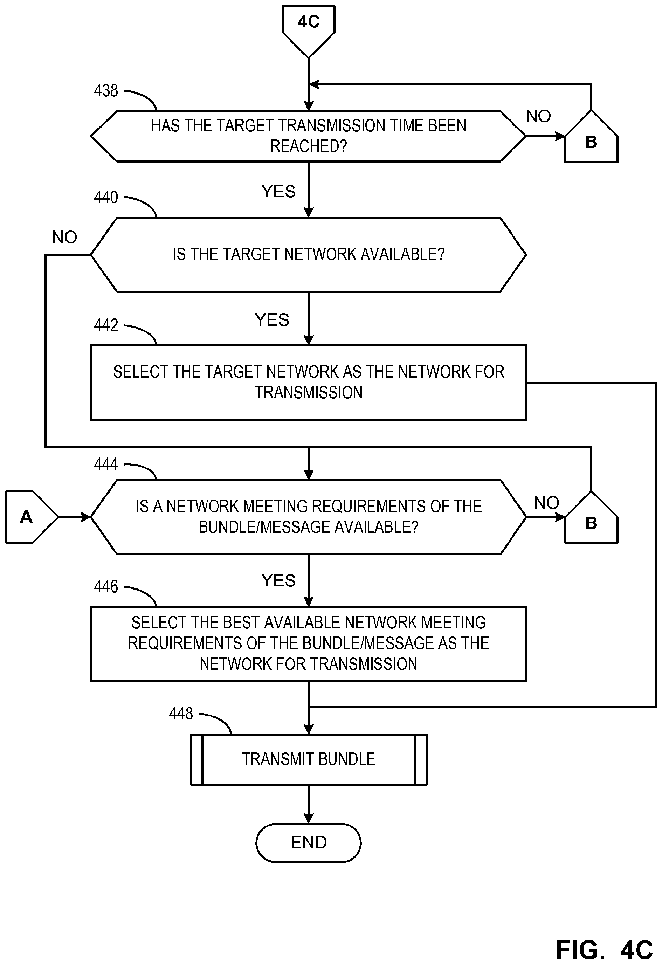

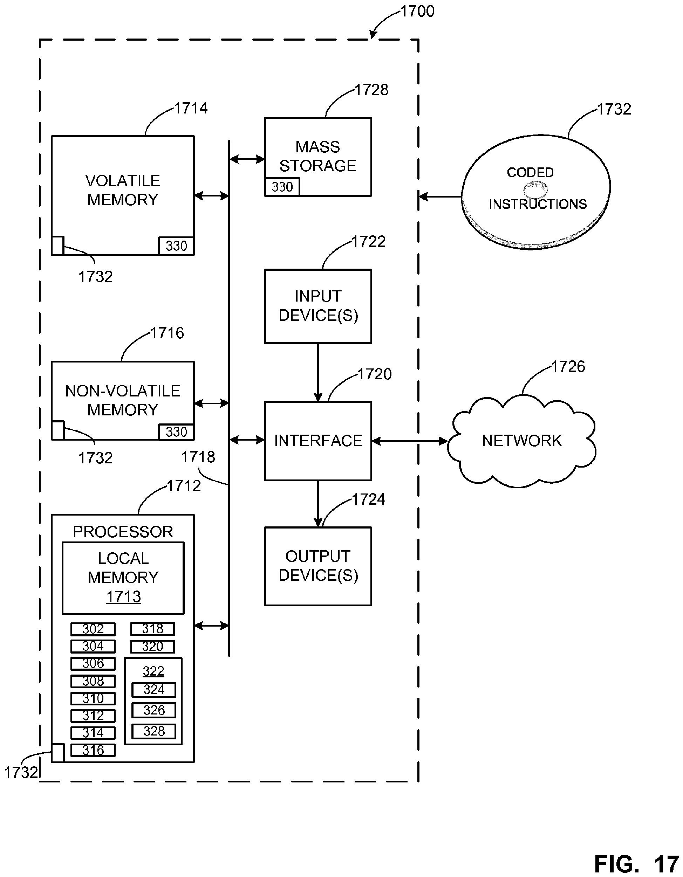

Flowcharts representative of example machine readable instructions for implementing the onboard computing device 106 of FIG. 3 are shown in FIGS. 4-7. In this example, the machine readable instructions comprise a program for execution by a processor such as a processor 1712 shown in the example processor platform 1700 discussed below in connection with FIG. 17. The program can be embodied in software stored on a non-transitory computer readable storage medium such as a CD-ROM, a floppy disk, a hard drive, a DVD, a Blu-ray disk, or a memory associated with the processor 1712, but the entire program and/or parts thereof could alternatively be executed by a device other than the processor 1712 and/or embodied in firmware or dedicated hardware. Further, although the example program is described with reference to the flowcharts illustrated in FIGS. 4-7, many other methods of implementing the example onboard computing device 106 of FIG. 3 can alternatively be used. For example, the order of execution of the blocks can be changed, and/or some of the blocks described can be changed, eliminated, or combined. Additionally or alternatively, any or all of the blocks can be implemented by one or more hardware circuits (e.g., discrete and/or integrated analog and/or digital circuitry, a Field Programmable Gate Array (FPGA), an Application Specific Integrated circuit (ASIC), a comparator, an operational-amplifier (op-amp), a logic circuit, etc.) structured to perform the corresponding operation without executing software or firmware.

As mentioned above, the example processes of FIGS. 4-7 can be implemented using coded instructions (e.g., computer and/or machine readable instructions) stored on a non-transitory computer and/or machine readable medium such as a hard disk drive, a flash memory, a read-only memory, a CD, a DVD, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. "Including" and "comprising" (and all forms and tenses thereof) are used herein to be open ended terms. Thus, whenever a claim lists anything following any form of "include" or "comprise" (e.g., comprises, includes, comprising, including, etc.), it is to be understood that additional elements, terms, etc. can be present without falling outside the scope of the corresponding claim. As used herein, when the phrase "at least" is used as the transition term in a preamble of a claim, it is open ended in the same manner as the term "comprising" and "including" are open ended. Example machine readable instructions for implementing the onboard computing device 106 of FIGS. 1 and 3 and that can be executed to perform dynamic network evaluation and network selection are illustrated in FIGS. 4A-4C. With reference to the preceding figures and associated descriptions, the example machine readable instructions 400 begin at block 402 with the example onboard computing device 106 receiving a message for transmission from an onboard system of the aircraft. The example message receiver 302 can receive a message for transmission from the onboard system of the aircraft. For example, the message receiver 302 can receive a message from an engine sensor indicating a performance characteristic or maintenance report. The example message receiver 302 can receive data from an external environmental sensor. The example message receiver 302 can receive a message from any onboard system of the aircraft, as previously described in association with the description of the block diagram of FIG. 3.

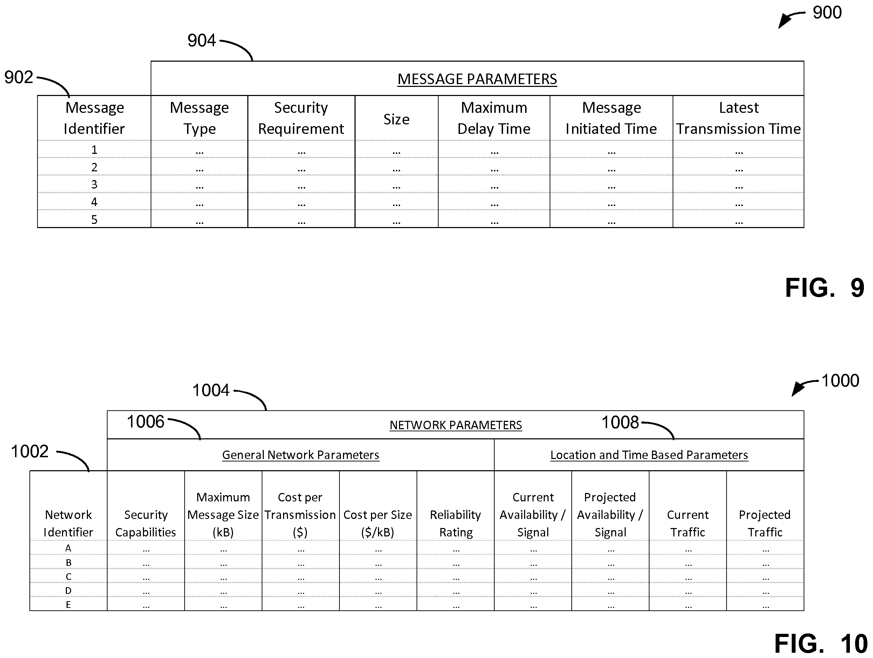

At block 404, the example onboard computing device 106 determines characteristics of the message. The example message analyzer 304 can determine characters of the message, including a message type. In some examples, based on the message type or other information, the message analyzer 304 determines numerous requirements associated with the message. For example, the message analyzer 304 can determine a maximum allowable delay time indicating the maximum amount of time the message can be delayed, and a corresponding maximum allowable delay transmission time indicating the latest time the message can be transmitted. The requirements can further include a security requirement (e.g., a level of required encryption, etc.), a network reliability requirement, a maximum cost requirement, etc. In some examples, the message analyzer 304 can determine various preferences associated with the message. For example, the preferences can include a preferred network, a preferred cost, a preferred transmission time, a preferred bundling size, a preferred security method, etc. In some examples, the example message analyzer can receive some preferences, such as a preferred cost range, a preferred security method, etc., and can process these parameters to determine a preferred transmission network and a preferred delay transmission time for the bundle at block 420. In some such examples, determining the preferred transmission network and the preferred delay transmission time may not be performed until it has been determined that mapping data and/or forecast data is available to avoid unnecessary processing, as selecting a target network without knowledge of mapping data and/or forecast data may not be valuable. An example list of characteristics that can be determined for a message is provided in the table of FIG. 9.

At block 406, the example onboard computing device 106 determines if the message is an emergency transmission. In some examples, the message analyzer 304 determines if the message is an emergency transmission based on characteristics of the message. For example, the message analyzer 304 can identify a specific term included in the message (e.g., "emergency," "medical," "error," "failure," "mayday," etc.) and determine that the message is an emergency transmission. In some examples, a message can include an indicator embedded in, or transmitted with, the message to indicate that the message is an emergency transmission. In response to the message being an emergency transmission, processing transfers to block 444 of FIG. 4C (indicated by reference "A" in FIGS. 4A and 4C). Conversely, in response to the message not being an emergency transmission, processing transfers to block 408.

At block 408, the example onboard computing device 106 determines if an existing bundle satisfies a compatibility criterion with the message. In some examples, the message bundler 306 determines if an existing bundle satisfies a compatibility criterion with the message. In some examples, the compatibility criterion can instead be multiple compatibility criteria. The compatibility criterion/criteria are parameters which a bundle must satisfy in order for a message to be added to the bundle. For example, the compatibility criterion/criteria can include a minimum security requirement that the bundle must have (e.g., an encryption level, etc.). In some examples, the compatibility criterion/criteria can include the bundle satisfying the requirements associated with the message. In some example, the compatibility criterion/criteria are the one or more requirements previously determined by the example message analyzer 304. In response to an existing bundle satisfying the compatibility criterion associated with the message, processing transfers to block 410. Conversely, in response to the existing bundle not satisfying a compatibility criterion with the message, processing transfers to block 412.

At block 410, the onboard computing device 106 adds the message to the existing bundle. In some examples, the message bundler 306 adds the message to the existing bundle that satisfies the compatibility criterion/ criteria.

At block 412, the example onboard computing device 106 creates a new bundle including the message. In some examples, the message bundler 306 creates a new bundle including the message.

At block 414, the example onboard computing device 106 sets a maximum allowable delay transmission time and other characteristics for the bundle equal to the same transmission time and characteristics of the message. In some examples, the message bundler 306 sets the maximum allowable delay transmission time and other characteristics for the bundle equal to the same transmission time and characteristic of the message. In some examples, the message bundler 306 can set the requirements associated with the bundle to be the requirements associated with the message. In some examples, the message bundler 306 can set the preferences of the bundle to be the preferences associated with the message, as previously determined by the message analyzer 304.

At block 416, the example onboard computing device 106 determines if relevant mapping data and/or forecast data is available. In some examples, the mapping data accessor 310 determines if relevant mapping data and/or forecast data is available. In some examples, the mapping data accessor 310 works in conjunction with the location data accessor 308 to send a request to a ground-based mapping system (e.g., the ground-based computing device 112 of the example of FIG. 2, etc.) to determine if relevant mapping data and/or forecast data is available pertaining to the current location or a future location. In response to relevant mapping data and/or forecast data being available, processing transfers to block 420. Conversely, in response to relevant mapping data and/or forecast data not being available, processing transfers to block 418.

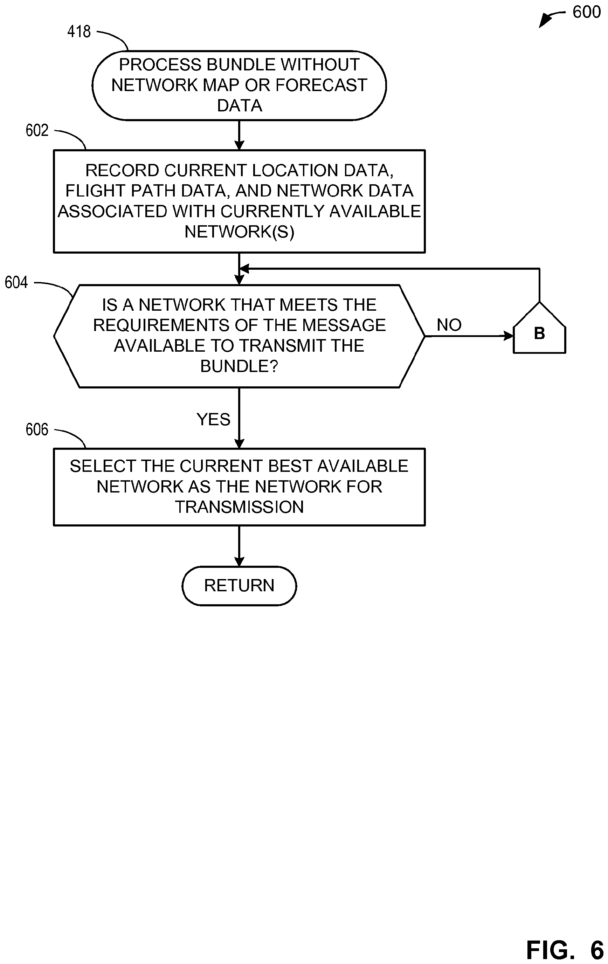

At block 418, the example onboard computing device 106 process the bundle without network map or forecast data. The example onboard computing device 106, in the absence of relevant mapping data and/or forecast data , logically attempts to determine and utilize a best available network for transmission of the bundle. Example approaches for processing the bundle without a network map are disclosed in further detail in connection with FIG. 6.

At block 420, the example onboard computing device 106 determines a preferred transmission network and a preferred delay transmission time for the bundle. In some examples, the message analyzer 304 determines a preferred transmission network and a preferred delay transmission time for the bundle based on characteristics of the bundle. In some examples, a message type can be associated with a preferred network and/or a preferred delay transmission time. In some examples, the message analyzer 304 can determine, based on requirements and preferences associated with a bundle, a preferred network and a preferred transmission time. For example, if a message is identified to be a maintenance alert message from an engine component, and the message is determined to be very important, the message analyzer 304 can select a preferred network that is highly reliable and secure for transmission of the message, and can set the preferred transmission time to a relatively short period, to ensure the message is sent quickly. In some examples, the preferred transmission network and the preferred delay transmission time for the bundle are determined at a different time during processing, such as after, or while, the characteristics of the message are determined (Block 404). In some examples, the preferred transmission network and the preferred delay transmission time for the bundle are determined after determining if relevant mapping data and/or forecast data is available, to avoid unnecessary processing when such data is unavailable.

At block 420, the example onboard computing device 106 accesses mapping data and/or forecast data, and location data. In some examples, the mapping data accessor 310 accesses mapping data based on information accessed by the location data accessor 308. For example, the location data accessor 308 can transmit location information (e.g., a GPS coordinate, a location along a flight path, etc.) to the mapping data accessor 310 to access mapping data relevant to the aircraft's position. In some examples, the mapping data accessor 310 can access an overall network map irrespective of the location of the aircraft. In some examples, the mapping data accessor 310 accesses the mapping data and/or forecast data stored in the data store 330. In some examples, the mapping data accessor 310 accesses the mapping data and/or forecast data via a network.

At block 424, the example onboard computing device 106 determines a forecast of networks that will be available within the preferred delay transmission time and the maximum allowable delay transmission time. In some examples, the mapping data analyzer 312 determines a forecast of networks that will be available within the preferred delay transmission time and the maximum allowable delay transmission time. The example mapping data analyzer 312 can filter the mapping data accessed by the mapping data accessor 310 to determine a forecast of networks that will be available within the preferred delay transmission time and the maximum allowable delay transmission time. In some examples, the mapping data can already be processed into a forecast when it is received by the mapping data accessor 310. In some examples, the forecast can include data pertaining to network availability, signal strength, predicted traffic, predicted weather conditions, and any other factors which can affect an ability to utilize the network at a future time.

The example machine readable instructions 400 continue in FIG. 4B and proceed, at block 426, with the example onboard computing device 106 determining if the preferred network for the bundle is forecast to be available within the preferred transmission time. In some examples, the target network determiner 314 determines if the preferred network for the bundle is forecast to be available within the preferred transmission time. The example target network determiner 314 can work in coordination with the mapping data analyzer 312 to determine, based on the forecast generated by the mapping data analyzer 312, if the preferred network is predicted to be available within the preferred transmission time. In response to the preferred network for the bundle being forecast to be available within the preferred transmission time, processing transfers to block 428. Conversely, in response to the preferred network for the bundle not being forecast to be available within the preferred transmission time, processing transfers to block 430.

At block 428, the example onboard computing device 106 selects the preferred network as the target network and selects a preferred transmission time as the target transmission time. In some examples, the target network determiner 314 selects the preferred network as the target network and selects a preferred transmission time as the target transmission time. The example target network determiner 314 can select the preferred transmission time based on preferences associated with the bundle, in combination with the forecast of network availability.

For example, if the preferences associated with the message indicate that the preferred transmission time is 10 minutes after the message is entered, to enable bundling within the 10 minutes, the target network determiner 314 can select a time within this range when, based on the forecast data, the preferred network will be available. If, for example, the preferred network is predicted to be available after at 10 minutes, the target network determiner 314 can select 10 minutes as the target transmission time, as this will enable the most bundling within the preferred transmission time. Conversely, if, for example, the preferred network is predicted to be available up until 9 minutes, the target network determiner 314 can select 9 minutes as the target transmission time, to ensure that the preferred network is utilized while still optimizing for the most possible bundling. In some examples, any other methodology for selecting a target network while optimizing to meet preferences associated with the bundle can be utilized.

At block 430, the example onboard computing device 106 determines if the preferred network for the bundle is forecast to be available within the maximum allowable transmission time. In some examples, the target network determiner 314 determines if the preferred network is forecast to be available within the maximum allowable transmission time. As the preferred network has previously been determined (at block 426) to not be available within the preferred transmission time, the target network determiner 314 now determines if the preferred network is predicted to be available prior to the maximum allowable transmission time (e.g., the required time within which the bundle is to be transmitted). In response to the preferred network being available within the maximum allowable transmission time, processing transfers to block 432. Conversely, in response to the preferred network not being available within the maximum allowable transmission time, processing transfers to block 434.

At block 432, the example onboard computing device 106 selects the preferred network as the target network and selects a time of availability as the target transmission time. In some examples, the target network determiner 314 selects the preferred network as the target network and selects a time of availability as the target transmission time. In some examples, the time of availability is the soonest time that the preferred network is forecast to be available, as the preferred network has already been identified as not being available within the preferred transmission time (at block 426). In some examples, the target transmission time can instead be selected as the latest time within the maximum allowable transmission time when the preferred network is available, to enable the most time for bundling. In some examples, any other methodology for selecting a target network while optimizing to meet preferences and satisfy requirements of the bundle can be utilized.

At block 434, the example onboard computing device 106 determines if a network meeting the requirements of the bundle is forecast to be available within the maximum allowable transmission time. In some examples, the target network determiner 314 can work in coordination with the mapping data analyzer 312 to determine, based on the forecast generated by the mapping data analyzer 312, if a network meeting the requirements of the bundle is forecast to be available within the maximum allowable transmission time. Such a network meeting the requirements of the bundle may not meet the preferences of the bundle but is at least satisfactory for transmission of the bundle. In response to determining that a network meeting the requirements of the bundle is forecast to be available within the maximum allowable transmission time, processing transfers to block 436 (indicated by reference "A" in FIGS. 4B and 4C). Conversely, in response to determining that a network meeting the requirements of the bundle is not forecast to be available within the maximum allowable transmission time, processing transfers to block 444 of FIG. 4C.

At block 436, the example onboard computing device 106 selects the best available network forecast to be available within the maximum allowable transmission time as the transmission network, and selects a target transmission time. In some examples, the example target network determiner 314 selects the best available network forecast to be available within the maximum allowable transmission time as the target network and selects a target transmission time. In some examples, the target transmission time can be the soonest time at which the best available network is forecast to be available. In some examples, the target transmission time can be the latest time, within the maximum allowable delay time, at which the target network is forecast to be available.

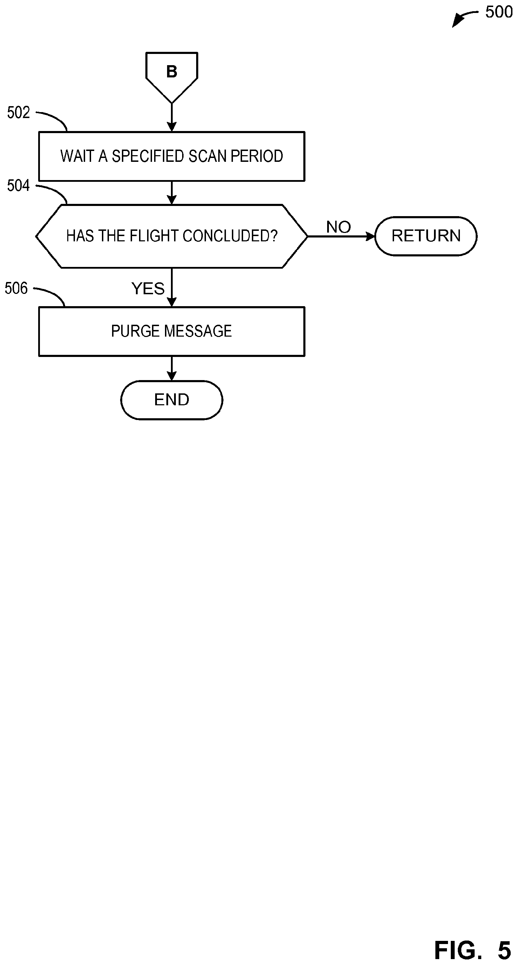

The example machine readable instructions 400 continue in FIG. 4C and proceed, at block 438, with the example onboard computing device 106 determining if the target transmission time has been reached. In some examples, the delay monitor 320 monitors the time that has passed since a message and/or bundle has been entered and determines if the target transmission time has been reached. In response to the target transmission time having been reached, processing transfers to block 440. Conversely, in response to the target transmission time not having been reached, processing transfers to block 502 of FIG. 5 (indicated by reference "B" in FIGS. 4C and 5).

At block 440, the example onboard computing device 106 determines if the target network is available. In some examples, the network communicator 318 determines if the target network is available. In response to the target network being available, processing transfers to block 442. Conversely, in response to the target network not being available, processing transfers to block 444.

At block 442, the example onboard computing device 106 selects the target network as the network for transmission. In some examples, the example network selector 316 selects the target network as the network for transmission of the bundle.

At block 444, the example onboard computing device 106 determines if a network meeting the requirements of the bundle/message is available. In some examples, the example network communicator 318 determines if a network meeting the requirements of the bundle/message is available at the current time by pinging networks. In response to a network meeting the requirements of the bundle/message being available, processing transfers to block 446. Conversely, in response to a network meeting the requirements of the bundle/message not being available, processing transfers to block 502 of FIG. 5 (indicated by reference "B" in FIGS. 4C and 5).

At block 446, the example onboard computing device 106 selects the best available network meeting the requirements of the bundle/message as the network for transmission. In some examples, the network selector 316 selects the best available network meeting the requirements of the bundle/message as the network for transmission.

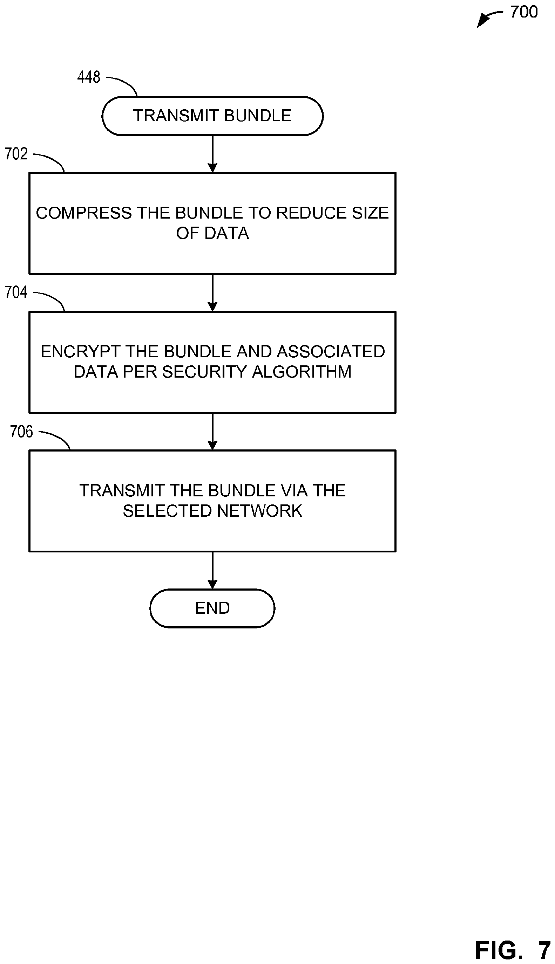

At block 448, the example onboard computing device 106 transmits the bundle. In some examples, the example message outputter 322 transmits the bundle. Example approaches for transmitting the bundle are disclosed in further detail in connection with FIG. 7.

Example machine readable instructions for implementing the onboard computing device 106 of FIGS. 1 and 3 and that can be executed to implement a scan period technique are illustrated in FIG. 5. With reference to the preceding figures and associated descriptions, the example machine readable instructions 500 begin at block 502 with the example onboard computing device 106 waiting a specified scan period. In some examples, the specified scan period can be a cycle period associated with a processor of the onboard computing device 106. In some examples, the specified scan period is a delay period at which the system performs a repetitive operation. For example, for any one of the blocks of the instructions 400 of FIGS. 4A-4C that lead to block 502, the scan period serves as a delay period before the same function from the instructions 400 is repeated. Hence, a longer specified scan period results in less frequent processing.

At block 504, the example onboard computing device 106 determines if the flight has concluded. In some examples, the location data accessor 308 can determine if the flight has concluded based on a location of the aircraft. In some examples, any other component on or in communication with the aircraft can indicate that the flight has concluded. In response to the flight having concluded, processing transfers to block 506. Conversely, in response to the flight having not concluded, processing returns to the block from the instructions 400 of FIGS. 4A-4C where the indication to transfer to block 502 was originally received. For example, if block 438 of FIG. 4C indicated that the target transmission time had not been reached, resulting in processing transferring to block 502 of FIG. 5, processing would return to block 438 of FIG. 4C.

At block 506, the example onboard computing device 106 purges the message. In some examples, the message outputter 322 purges the message pending transmission in response to the flight having concluded. In some examples, the message outputter 322 purges the messages by transmitting them via a best available network, such as an aircraft wi-fi network (e.g., Gatelink, etc.). The example message outputter 322 can coordinate with the network communicator 318 to determine a best available message (e.g., lowest cost) for transmitting any remaining pending messages when the flight has concluded.

Example machine readable instructions for implementing the onboard computing device 106 of FIGS. 1 and 3 and that can be executed to process a bundle without a network map or forecast data (block 418 of the example of FIG. 4A) are illustrated in FIG. 6. With reference to the preceding figures and associated descriptions, the example machine readable instructions 600 begin with the example onboard computing device 106 recording current location data, flight path data, and network data associated with the currently available network(s) (Block 602). In some examples, the example location data accessor 308 records the current location and flight path data, and the network communicator 318 records the network data associated with currently available networks. In some examples, the example network communicator 318 can collect data on a variety of different parameters of network data (e.g., network availability, signal strength, traffic conditions, etc.). In some examples, the example network communicator 318 and/or the example location data accessor 308 can collect information regarding sensitivity factors (e.g., weather, equipment, etc.) that can prove valuable when such data is included in network maps in order to make appropriate correlations between such data and a new forecasting scenario. In some examples, recording the current location data, flight path data, and network data associated with currently available network(s) refers to transmitting such data to a ground-based facility for recordation and use in generating a network map.

At block 604, the example onboard computing device 106 determines if a network is available to transmit the message that meets the requirements of the message. In some examples, the example network communicator 318 determines networks that are available, and works in coordination with the message analyzer 304 to determine if requirements of the message are met by any of the available networks. In response to a network that meets the requirements of the message being available to transmit the bundle, processing transfers to block 606. Conversely, in response to a network that meets the requirements of the message not being available to transmit the bundle, processing transfer to block 502 of FIG. 5. At block 606, the example onboard computing device 106 selects the current best available network as the network for transmission. In some examples, the network selector 316 selects a network, among the networks determined to be available by the network communicator 318, that meets the requirements of the message and meets as many of the preferences of the message as possible (the best available network).

Example machine readable instructions for implementing the onboard computing device 106 of FIGS. 1 and 3 and that can be executed to transmit a message bundle (block 448 of the example of FIG. 4C) are illustrated in FIG. 7. With reference to the preceding figures and associated descriptions, the example machine readable instructions 700 begin at block 702 with the example onboard computing device compressing the bundle to reduce the size of the data. In some examples, the example data compressor 324 compresses the bundle to reduce the size of the data. The example data compressor 324 can use any method to compress the size of the bundle. In some examples, the example data compressor 324 compresses the bundle to achieve a low cost, to meet a maximum file size requirement, to improve the transmission speed, and/or for any other desired reason. In some examples, the message bundle can be transmitted without compression.

At block 704, the example onboard computing device 106 encrypts the bundle and the associated data per a security algorithm. In some examples, the example data encrypter 326 encrypts the bundle and associated data per the security algorithm. In some examples, the data encrypter 326 determines whether a bundle should be encrypted, and/or to what extent a bundle should be encrypted, prior to encrypting the bundle.

At block 706, the example onboard computing device 106 transmits the bundle via the selected network. In some examples, the example message transmitter 328 transmits the bundle via the selected network. In some examples, the example message transmitter 328 awaits a receipt and/or other form of confirmation to verify that the bundle has been transmitted, and informs the onboard computing device 106 when transmission is complete. In some examples, following the transmission of the bundle, the onboard computing device 106 deletes data associated with the message from a temporary storage (e.g., in the data store 330).

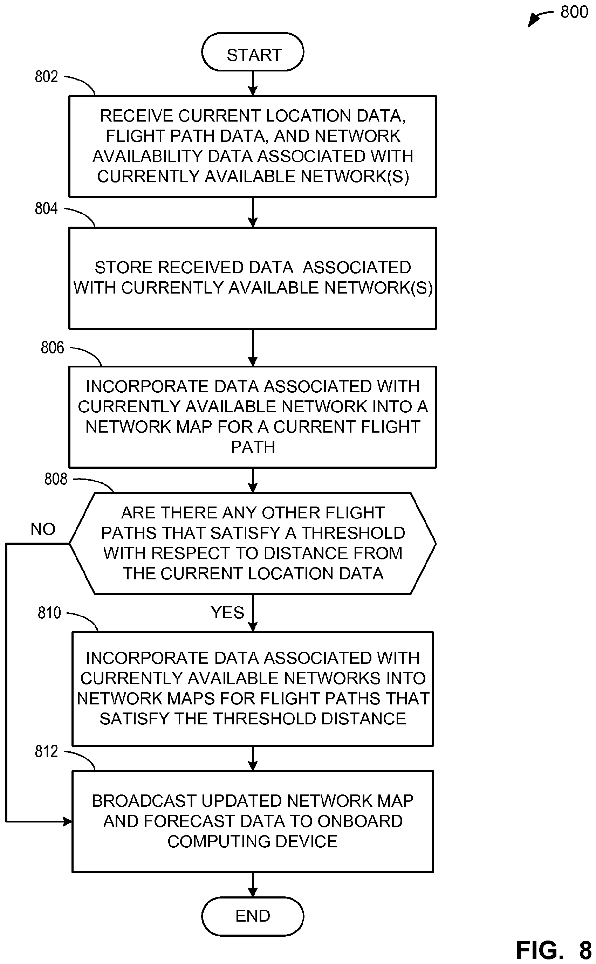

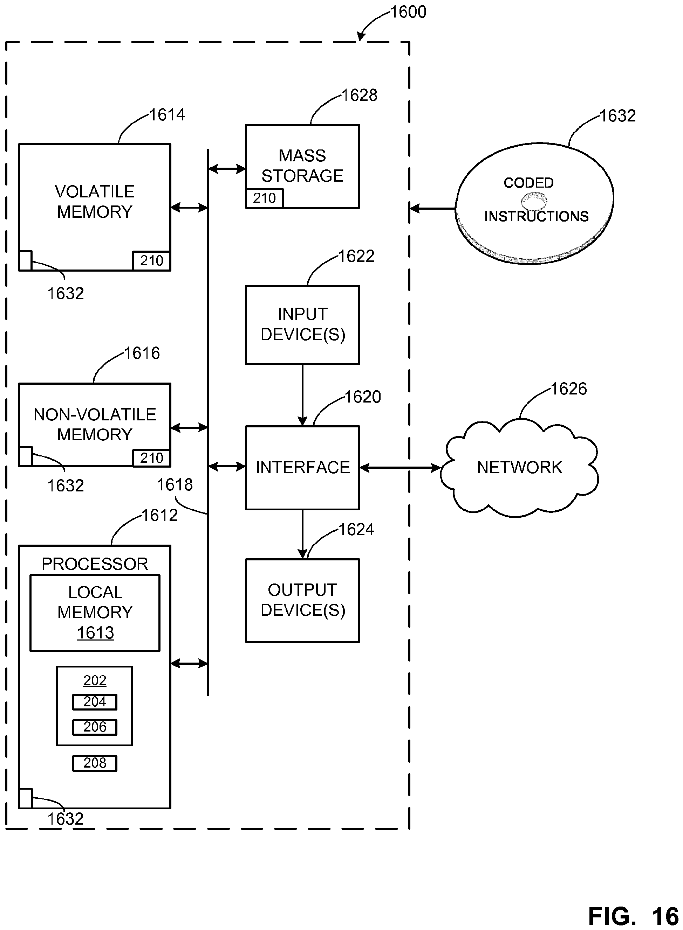

A flowchart representative of example machine readable instructions for implementing the ground-based computing device 112 of FIGS. 1 and 2 are shown in FIG. 8. In this example, which does not fall within the scope of the claims, the machine readable instructions comprise a program for execution by a processor such as a processor 1612 shown in the example processor platform 1600 discussed below in connection with FIG. 16. The program can be embodied in software stored on a non-transitory computer readable storage medium such as a CD-ROM, a floppy disk, a hard drive, a DVD, a Blu-ray disk, or a memory associated with the processor 1612, but the entire program and/or parts thereof could alternatively be executed by a device other than the processor 1612 and/or embodied in firmware or dedicated hardware. Further, although the example program is described with reference to the flowchart illustrated in FIG. 8, many other methods of implementing the example ground-based computing device 112 can alternatively be used. For example, the order of execution of the blocks can be changed, and/or some of the blocks described can be changed, eliminated, or combined. Additionally or alternatively, any or all of the blocks can be implemented by one or more hardware circuits (e.g., discrete and/or integrated analog and/or digital circuitry, a Field Programmable Gate Array (FPGA), an Application Specific Integrated circuit (ASIC), a comparator, an operational-amplifier (op-amp), a logic circuit, etc.) structured to perform the corresponding operation without executing software or firmware.

As mentioned above, the example processes of FIG. 8 can be implemented using coded instructions (e.g., computer and/or machine readable instructions) stored on a non-transitory computer and/or machine readable medium such as a hard disk drive, a flash memory, a read-only memory, a CD, a DVD, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. "Including" and "comprising" (and all forms and tenses thereof) are used herein to be open ended terms. Thus, whenever a claim lists anything following any form of "include" or "comprise" (e.g., comprises, includes, comprising, including, etc.), it is to be understood that additional elements, terms, etc. can be present without falling outside the scope of the corresponding claim. As used herein, when the phrase "at least" is used as the transition term in a preamble of a claim, it is open ended in the same manner as the term "comprising" and "including" are open ended.

Example machine readable instructions for implementing the ground-based computing device 112 of FIGS. 1 and 2 and that can be executed to perform network mapping are illustrated in FIG. 8. With reference to the preceding figures and associated descriptions, the example machine readable instructions 800 begin at block 802 with the example ground-based computing device 112 receiving current location data, flight path data, and network data associated with currently available networks. In some examples, the mapping data receiver 204 receives the current location data, flight path data, and the network data associated with currently available networks. In some examples, the mapping data receiver 204 can additionally or alternatively receive any type of data from aircraft that is pertinent to developing network maps and forecasts of network availability.

At block 804, the example ground-based computing device 112 stores received data associated with currently available networks. In some examples, the example mapping data receiver 204 stores data associated with currently available networks to the mapping data store 210. In some examples, the mapping data receiver 204 stores data received in a single overall network map database, where mapping data from a plurality of aircraft can be stored. In some such examples, the data can be stored in the single overall network map database and not associated with a flight path, in which case, processing may transfer from block 804 to block 812. In some examples, the example mapping data receiver 204 stores the data in a database or location specific to a region, flight path, or other classifying characteristic.

At block 806, the example ground-based computing device 112 incorporates data associated with currently available networks into a network map for a current flight path. In some examples, the example mapping data assignor 206 incorporates data associated with currently available networks into a network map for a current flight path. In some examples, where the data is duplicative in terms of a characteristic (e.g., location, etc.) with data currently in the network map, an average can be made between the existing data and the new data and incorporated into the network map. In some examples, the example mapping data assignor 206 can store the data in a database or location specific to a region, flight path, or other classifying characteristic.

At block 808, the example ground-based computing device 112 determines if there are any other flight paths that satisfy a threshold with respect to distance from the current location data. In some examples, the example mapping data assignor 206 determines if there are any other flight paths that satisfy a threshold with respect to distance from the current location data. In some examples, the example mapping data assignor 206 accesses flight paths based on known flight paths from network availability data that has already been collected. In some examples, the example mapping data assignor 206 accesses flight paths based on flight paths from another data source (e.g., an airline, an operator, another aircraft, etc.).

At block 810, the example ground-based computing device 112 incorporates data associated with currently available networks into network maps for flight paths that satisfy the threshold distance. In some examples, the example mapping data assignor 206 incorporates data associated with currently available networks into network maps for flights that satisfy the threshold distance.

At block 812, the example ground-based computing device 112 broadcasts updated network map and forecast data to an onboard computing device. In some examples, the example mapping data broadcaster 210 broadcasts updated network map and forecast data to the onboard computing device. In some examples, the example mapping data broadcaster 208 broadcasts a network map to aircraft that can make use of the network map any time the network map is created or updated. In some examples, the example mapping data broadcaster 210 broadcasts network maps based on requests received from aircraft.

FIG. 9 is an example table 900 of message parameters that can be received and processed using the techniques disclosed herein. The example table 900 can, for example, be generated by the example message analyzer 304 for one or more of the messages received by the example message receiver 302. The example table 900 includes a message identifier 902 associated with messages received, as well as numerous message parameters 904 associated with the message. The example message identifier 902 can be a number indicating an order in which the message has been received. In some examples the message identifier 902 can correspond to the contents of the message (e.g., "medical message #1," "engine sensor message #1," etc.). The example message parameters 904 can include any information necessary, or helpful, in analyzing and transmitting the messages. The example message parameters 904 can include a message type (e.g., medical, location, air traffic control, etc.), a security requirement (e.g., a designation if encryption is required, a designation that a specific type of encryption is required etc.), a size (e.g., in bytes, kilobytes, etc.), a maximum allowable delay value, a message initiated time (e.g., the time at which the measure was received by the onboard computing device, etc.), and/or a latest transmission time (e.g., the message initiated time plus the maximum allowable delay value, etc.). The example message parameters 904 can additionally or alternatively include any other parameters relevant to processing and transmitting any message. In some examples, the example message parameters 904 can be utilized by the message bundler 306 to determine compatibility for a message to be bundled with another message. In some examples, the example message parameters 904 can be utilized by the example target network determiner 314 and/or the example network selector 316 to determine an appropriate target network for transmission of the message. In some examples, the example message outputter 322 and components included therein can access the example message parameters 904 to determine appropriate transmission conditions for a message.

FIG. 10 is an example table 1100 of network parameters that can be determined and utilized using the techniques disclosed herein. The example table includes a network identifier 1002 corresponding to a network in communication with the onboard computing device. In some examples, the network identifier 1002 can be a name associated with the network. The example table further includes network parameters 1004. The example network parameters 1004 include general network parameters 1006. The example general network parameters 1006 can apply to the network in general, as opposed to applying at a specific location and/or time. The example general network parameters 1006 include security capabilities (e.g., the type of encryption methods that are supported, the overall level of security of the network, etc.), a maximum message size (e.g., corresponding to a maximum bundle size that can be transmitted as a single transmission, etc.), a cost per transmission (e.g., a cost associated with a transmission, etc.), a cost per size (e.g., a cost that varies depending on the size of the transmission, etc.), and/or a reliability rating. The example network parameters 1004 can further include location and time based parameters 1008. The example location and time based parameters 1008 include a current availability and signal, a projected availability and signal (e.g., based on forecast data from a network map, etc.), a current traffic, and/or a projected traffic (e.g., based on forecast data from a network map, etc.). The example network parameters 1004 can additionally or alternatively include any other parameters useful in dynamic network evaluation and network selection. The example network parameters 1004 can be accessed by the example network communicator 318 and the example mapping data analyzer 312 and utilized by the example target network determiner 314 and the example network selector 316 for determining a target network and selecting a transmission network.

FIG. 11 is an example table 1100 including example messages processed in accordance with the teachings disclosed herein. The example table 1100 includes numerous messages and includes a numeral message identifier column 1102 assigned in the order in which the messages are received (e.g., 1-6). The example table 1100 further includes a time column 1104 including a time the message has been received by the onboard computing device. A message type column 1106 is further included, including a general categorization to messages (e.g., location reporting, beverage restock, ATC message, medical emergency, etc.). The example table 1100 additionally includes a maximum allowable delay value column 1108 (e.g., in seconds, etc.), which can be assigned based on the message type. The example latest transmission time column 1110 represents the maximum allowable delay value added to the time the message has been received. The size value column 1112 represents the overall size of the message. In some examples, the message can be a bundle including multiple message. In such an example, the size value can correspond to the size of the overall bundle. The encryption requirement column 1114, in this implementation, includes an indicator of whether encryption is required for the message.

The example table 1100 can be generated by the example network mapper 202 of the illustrated example of FIG. 2. In some examples, the example table 1100 can be generated by the example message analyzer 304 of the illustrated example of FIG. 3. The example table 1100 can be subsequently utilized by the example target network determiner 314 and/or the example network selector 316 to enable the comparison of message parameters and/or requirements, as included in the columns of the example table 1100, with characteristics of networks. In such an example, the example target network determiner 314 can additionally use information included in the example table 1100 to identify networks in forecasts generated by the example mapping data analyzer 312 that are predicted to be available and satisfy the requirements of the message.

FIG. 12A is an example network map 1200A representing network availability of a first network on a flight path. The example network map 1200A includes an example aircraft 1202 traveling from an example first location 1204 to an example second location 1206. The example network map 1200A includes a first network unavailable forecast region 1208A corresponding to the first network (e.g., "Network A," etc.). The example network map 1200A additionally includes a first network signal available region 1210A corresponding to the first network.

The example network map 1200A can be generated based on the example machine readable instructions 800 of the illustrated example of FIG. 8 by the example ground-based computing device 112 of the illustrated example of FIGS. 1 and 2. In some examples, the example network mapper 202 can receive data pertaining to aircraft that have traversed the flight path from the example first location 1204 to the example second location 1206 and amalgamate the data to form the example network map 1200A of FIG. 12A.The example network map 1200A can be used by the example onboard computing device 106 of the illustrated example of FIGS. 1 and 3 to determine a preferred network for transmission of a message. For example, the example target network determiner 314 of the example onboard computing device 106 can determine, based on the example network map 1200A, whether the first network will be available within a maximum allowable delay time for the message to be transmitted, based on the example network map 1200A and a current speed and location along the flight path. In such an example, the example target network determiner 314 can select an alternative network for transmission of the message.

FIG. 12B is an example network map 1200B representing network signal strength for the first network on the flight path. In some examples, the example network mapper 202 can store network signal strength data additionally or alternatively to network availability data to provide more granular data. The example network map 1200B includes the aircraft 1202 traveling from the first location 1204 to the second location 1206. The example network map 1200B includes a no signal forecast region 1208B, a low signal forecast region 1210B, a medium signal forecast region 1212B, and a high signal forecast region 1214B, along the flight path.

The example network map 1200B can be generated based on the example machine readable instructions 800 of the illustrated example of FIG. 8 by the example ground-based computing device 112 of the illustrated example of FIGS. 1 and 2. The example mapping data assignor 206 additionally can generate a network map including any network parameter. For example, the example network map can include any of the example network parameters 1004 (e.g., network traffic, network reliability, etc.) of the example table 1000 of FIG. 10. The example network map 1200B can be used by the example onboard computing device 106 of the illustrated example of FIGS. 1 and 3 to determine a preferred network for transmission of a message. For example, the example target network determiner 314 of the example onboard computing device 106 can determine, based on the example network map 1200B, whether the first network will have a sufficient signal strength to meet a requirement of the message to be transmitted within a maximum allowable delay time, based on the example network map 1200B and a current speed and location along the flight path.

FIG. 12C is an example network map 1200C representing network availability of a second network on the flight path. The example network map 1200C includes the aircraft 1202 traveling from the first location 1204 to the second location 1206. The example network map 1200C includes second network available forecast regions 1208C, 1212C, and second network unavailable forecast regions 1210C, 1214C, corresponding to the second network ("Network B").

The example network map 1200C can be generated based on the example machine readable instructions 800 of the illustrated example of FIG. 8 by the example ground-based computing device 112 of the illustrated example of FIGS. 1 and 2. The example network map 1200C can be generated similarly to the example network map 1200A, including network availability data pertaining to the second network instead of, or in addition to, network availability data pertaining to the first network. The example network map 1200C can be used by the example onboard computing device 106 of the illustrated example of FIGS. 1 and 3 to determine if a preferred network is predicted to be available within a preferred transmission time and/or within the maximum allowable transmission time . For example, the example target network determiner 314 of the example onboard computing device 106 can determine, based on the example network map 1200C, whether the second network will have availability within a maximum allowable delay time of the message to be transmitted within the preferred transmission time and/or the maximum allowable delay time, based on the example network map 1200C and a current speed and location along the flight path.

FIG. 13A is an example combined network map 1300A representing the combined network availabilities of the first and second networks on the flight path associated with FIGS. 12A-12C. The example network map 1300A includes the aircraft 1202 traveling from the first location 1204 to the second location 1206. The example network map 1300A includes regions where only the second network (e.g., "Network B," etc.) is forecast to be available 1302A, 1306A, a no signal forecast region for both networks 1304A, and a region where both the first network (e.g., "Network A," etc.) and the second network are forecast to be available 1308A.

The example combined network map 1300A can be generated based on the example machine readable instructions 800 of the illustrated example of FIG. 8 by the example ground-based computing device 112 of the illustrated example of FIGS. 1 and 2. In some examples, the example mapping data assignor 206 can combine one or more network maps (e.g., combing the example network maps 1200A, 1200C) to generate the example combined network map 1300A. In some examples, the example mapping data assignor 206 can generate the example combined network map 1300A from network availability data pertaining to the first network and the second network upon receiving the network availability data from aircraft, with or without generating the example network maps 1200A, 1200C pertaining to each individual network. The example network map 1300A can be used by the example onboard computing device 106 of the illustrated example of FIGS. 1 and 3 to determine a preferred network for transmission of a message. For example, the example target network determiner 314 of the example onboard computing device 106 can determine, based on the example network map 1300A, whether the first network or the second network will have availability within a preferred transmission time and/or a maximum transmission delay time for a message, based on the example network map 1300A and a current speed and location along the flight path.

FIG. 13B is an example probability plot 1300B corresponding to a forecast of network availabilities of the first network and the second network on the flight path associated with FIGS. 12A-13A. The example probability plot 1300B includes an example probability threshold 1301B at which a network is predicted to be available if a probability value of the network is above the probability threshold 1301B. The example probability threshold 1301B can be any value and/or can be any other criterion utilized to determine if a network is forecast to be available. The example probability plot 1300B includes regions where only the second network (e.g., "Network B," etc.) is forecast to be available 1302B, 1306B corresponding to regions where only the second network (e.g., "Network B," etc.) is forecast to be available 1302A, 1306A of the network map of FIG. 13A. The example probability plot 1300B further includes a no signal forecast for both networks region 1304B corresponding to a no signal forecast for both networks region 1304A of the network map of FIG. 13A. The example probability plot 1300B includes a region where both the first network and the second network are forecast to be available 1308B, corresponding to the region where both networks are forecast to be available 1308A of the network map of FIG. 13A.

In some examples, the example probability plot 1300B can be generated by the example ground-based computing device 112 of the illustrated example of FIGS. 1 and 2. In some examples, the example probability plot can be generated by the example mapping data assignor 206 and can be transmitted to the example onboard computing device 106 to enable the generation of forecasts of network availability. In some examples, the example probability plot 1300B itself, and/or the data represented in the example probability plot 1300B can constitute the forecast of network availability.

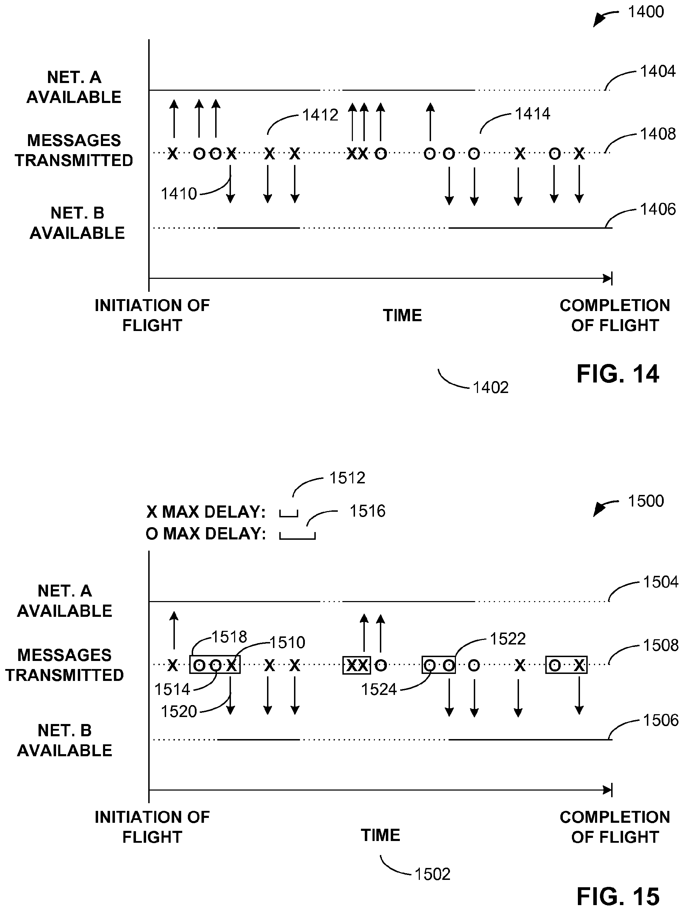

FIG. 14 is an example schematic of a message transmission scheme 1400 without bundling and delayed message transmission. The example message transmission scheme 1400 depicts messages that have been received by the onboard computing system during a flight, as well as the transmission of the messages using either a first available network (e.g., network A, etc.) or a second available network (e.g., network B, etc.). The example message transmission scheme 1400 is a visual representation of the outcome of the example instructions 400 of the illustrated example of FIG. 4 to implement the example onboard computing device 112 of the illustrated example of FIGS. 1 and 3 to perform dynamic network evaluation and network selection, without at least the bundling and delay aspects of the example instructions 400.

The example message transmission scheme 1400 includes an example time axis 1402, spanning from an initiation of a flight to a completion of a flight. The example message transmission scheme 1400 further includes an example first network availability indicator line 1404 and an example second network availability indicator line 1406. In areas where the first network availability indicator line 1404 is solid, the first network is available at the corresponding time. Similarly, in areas where the second network availability indicator line 1406 is solid, the second network is available at the corresponding time. The example message transmission scheme 1400 further includes a message transmission line 1408, including numerous messages that are received and transmitted by the onboard computing system.

The example message transmission scheme 1400 includes a multitude of messages with an example first message type 1410, corresponding to a higher priority message (e.g., a message with a shorter maximum allowable delay, etc.), and a multitude of messages with an example second message type 1414, corresponding to a lower priority message (e.g., a message with a longer maximum allowable delay, etc.). The example message transmission scheme 1400 further includes example arrows 1412 associated with a time of transmission and a network of transmission. In the example message transmission scheme 1400, when an arrow points upwards toward the first network availability indicator line 1404, the message is transmitted via the first network (e.g., network A, etc.). Conversely, when an arrow points downwards toward the second network availability indicator line 1406, the message is transmitted via the second network (e.g., network B, etc.). In the example message transmission scheme 1400, when both the first network and the second network are available and satisfy message requirements/criteria, the messages are transmitted over whichever network is lower cost. For example, assuming both the first network and the second network meet the transmission requirements for the messages of the example message transmission scheme 1400, the second network has a lower cost and is utilized when both networks are available. As the example message transmission scheme 1400 does not include delayed message transmission, messages are transmitted immediately upon processing via the best available network.

FIG. 15 is an example schematic of a message transmission scheme 1500 including bundling and delayed message transmission. The example message transmission scheme 1500 depicts messages that have been received by the onboard computing system during a flight, as well as the transmission of the messages using either a first available network (e.g., network A, etc.) or a second available network (e.g., network B, etc.). The example message transmission scheme 1500 is a visual representation of the outcome of the example instructions 400 of the illustrated example of FIG. 4 to implement the example onboard computing device 112 of the illustrated example of FIGS. 1 and 3 to perform dynamic network evaluation and network selection including the bundling and delay aspects of the example instructions 400.

The example message transmission scheme 1500 includes an example time axis 1502, spanning from an initiation of a flight to a completion of a flight. The example message transmission scheme 1500 further includes an example first network availability indicator line 1504 and an example second network availability indicator line 1506. In areas where the first network availability indicator line 1504 is solid, the first network is available at the corresponding time. Similarly, in areas where the second network availability indicator line 1506 is solid, the second network is available at the corresponding time. The example message transmission scheme 1500 further includes a message transmission line 1508, including numerous messages that are received and transmitted by the onboard computing system.

The example message transmission scheme 1500 includes a multitude of messages with an example first message type 1510, corresponding to a message having an example short maximum allowable delay time 1512. The example message transmission scheme 1500 further includes a multitude of messages with an example second message type 1514, corresponding to message having an example long maximum allowable delay time 1516. In some examples, the example short maximum allowable delay time 1512 and the example long maximum allowable delay time 1516 can be any maximum allowable delay time. Additionally, the example message transmission scheme 1500 can include any number of message delay times corresponding to any number of message types. The example message transmission scheme 1500 includes an example first bundle 1518, including multiple messages that are transmitted together. The example message transmission scheme 1500 includes example arrows 1520 associated with a time of transmission and a network of transmission. The example first bundle 1518, for example, is transmitted at a time nearing the long maximum allowable delay time 1516 corresponding to the first message in the bundle. The example first bundle 1518 includes three messages, which are transmitted via the best available network that meets the requirements of the bundle and has the lowest transmission cost. Consequently, the delayed message transmission and bundling implemented in the example message transmission scheme 1500 enabled a lower cost transmission by reducing the costs associated with message transmissions by bundling messages for transmission while still meeting the requirements of the individual messages.

The example message transmission scheme 1500 also includes an example second bundle 1522. The example second bundle includes a first message 1524 associated with the example long maximum allowable delay time 1514. In an implementation without delayed transmission, the example first message 1524 would have been transmitted via the only available network at the time the message was entered, the first network (e.g., network A, etc.). In the example message transmission scheme 1500, the example first message 1524 is instead transmitted via the lower cost second network (e.g., network B, etc.) within the example long maximum allowable delay time 1514, and is transmitted as part of the example second bundle 1522, incurring further cost savings.

FIG. 16, which does not fall within the scope of the claims, is a block diagram of an example processor platform 1600 capable of executing the instructions of FIG. 8 to implement the ground-based computing device 112 of FIG. 2. The processor platform 1600 can be, for example, a server, a personal computer, a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, or any other type of computing device.

The processor platform 1600 of the illustrated example includes a processor 1612. The processor 1612 of the illustrated example is hardware. For example, the processor 1612 can be implemented by one or more integrated circuits, logic circuits, microprocessors or controllers from any desired family or manufacturer. The hardware processor can be a semiconductor based (e.g., silicon based) device. In this example, the processor 1612 implements the example network mapper 202, the example mapping data receiver 204, the example mapping data assignor 206, the example mapping data broadcaster 208 and the example mapping data store 210.

The processor 1612 of the illustrated example includes a local memory 1613 (e.g., a cache). The processor 1612 of the illustrated example is in communication with a main memory including a volatile memory 1614 and a non-volatile memory 1616 via a bus 1618. The volatile memory 1614 can be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1616 can be implemented by flash memory and/or any other desired type of memory device. Access to the main memory 1614, 1616 is controlled by a memory controller.

The processor platform 1600 of the illustrated example also includes an interface circuit 1620. The interface circuit 1620 can be implemented by any type of interface standard, such as an Ethernet interface, a universal serial bus (USB), and/or a peripheral component interconnect (PCI) express interface.

In the illustrated example, one or more input devices 1622 are connected to the interface circuit 1620. The input device(s) 1622 permit(s) a user to enter data and/or commands into the processor 1612. The input device(s) can be implemented by, for example, an audio sensor, a microphone, a camera (still or video), a keyboard, a button, a mouse, a touchscreen, a track-pad, a trackball, an isopoint device, and/or a voice recognition system.

One or more output devices 1624 are also connected to the interface circuit 1620 of the illustrated example. The output devices 1024 can be implemented, for example, by display devices (e.g., a light emitting diode (LED), an organic light emitting diode (OLED), a liquid crystal display, a cathode ray tube display (CRT), a touchscreen, a tactile output device, a printer and/or speakers). The interface circuit 1620 of the illustrated example, thus, typically includes a graphics driver card, a graphics driver chip and/or a graphics driver processor.

The interface circuit 1620 of the illustrated example also includes a communication device such as a transmitter, a receiver, a transceiver, a modem and/or network interface card to facilitate exchange of data with external machines (e.g., computing devices of any kind) via a network 1626 (e.g., an Ethernet connection, a digital subscriber line (DSL), a telephone line, coaxial cable, a cellular telephone system, etc.).

The processor platform 1600 of the illustrated example also includes one or more mass storage devices 1628 for storing software and/or data. Examples of such mass storage devices 1628 include floppy disk drives, hard drive disks, compact disk drives, Blu-ray disk drives, redundant array of independent disks (RAID) systems, and DVD drives.

The coded instructions 1632 of FIG. 8 can be stored in the mass storage device 1628, in the volatile memory 1614, in the non-volatile memory 1616, and/or on a removable non-transitory computer readable storage medium such as a CD or DVD

FIG. 17 is a block diagram of an example processor platform 1700 capable of executing the instructions of FIGS. 4-7 to implement the onboard computing device 106 of FIG. 3. The processor platform 1700 can be, for example, a server, a personal computer, a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, or any other type of computing device.

The processor platform 1700 of the illustrated example includes a processor 1712. The processor 1712 of the illustrated example is hardware. For example, the processor 1712 can be implemented by one or more integrated circuits, logic circuits, microprocessors or controllers from any desired family or manufacturer. The hardware processor can be a semiconductor based (e.g., silicon based) device. In this example, the processor 1712 implements the example message receiver 302, the example message analyzer 304, the example message bundler 306, the example location data accessor 308, the example mapping data accessor 310, the example mapping data analyzer 312, the example target network determiner 314, the example network selector 316, the example network communicator 318, the example delay monitor 320, the example message outputter 322, the example data compressor 324, the example data encrypter 326, the example message transmitter 328, and the example data store 330.

The processor 1712 of the illustrated example includes a local memory 1713 (e.g., a cache). The processor 1712 of the illustrated example is in communication with a main memory including a volatile memory 1714 and a non-volatile memory 1716 via a bus 1718. The volatile memory 1714 can be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1716 can be implemented by flash memory and/or any other desired type of memory device. Access to the main memory 1714, 1716 is controlled by a memory controller.

The processor platform 1700 of the illustrated example also includes an interface circuit 1720. The interface circuit 1720 can be implemented by any type of interface standard, such as an Ethernet interface, a universal serial bus (USB), and/or a peripheral component interconnect (PCI) express interface.

In the illustrated example, one or more input devices 1722 are connected to the interface circuit 1720. The input device(s) 1722 permit(s) a user to enter data and/or commands into the processor 1712. The input device(s) can be implemented by, for example, an audio sensor, a microphone, a camera (still or video), a keyboard, a button, a mouse, a touchscreen, a track-pad, a trackball, an isopoint device, and/or a voice recognition system.

One or more output devices 1724 are also connected to the interface circuit 1720 of the illustrated example. The output devices 1724 can be implemented, for example, by display devices (e.g., a light emitting diode (LED), an organic light emitting diode (OLED), a liquid crystal display, a cathode ray tube display (CRT), a touchscreen, a tactile output device, a printer and/or speakers). The interface circuit 1720 of the illustrated example, thus, typically includes a graphics driver card, a graphics driver chip and/or a graphics driver processor.

The interface circuit 1720 of the illustrated example also includes a communication device such as a transmitter, a receiver, a transceiver, a modem and/or network interface card to facilitate exchange of data with external machines (e.g., computing devices of any kind) via a network 1726 (e.g., an Ethernet connection, a digital subscriber line (DSL), a telephone line, coaxial cable, a cellular telephone system, etc.).

The processor platform 1700 of the illustrated example also includes one or more mass storage devices 1728 for storing software and/or data. Examples of such mass storage devices 1728 include floppy disk drives, hard drive disks, compact disk drives, Blu-ray disk drives, redundant array of independent disks (RAID) systems, and DVD drives.

The coded instructions 1732 of FIGS. 4-7 can be stored in the mass storage device 1728, in the volatile memory 1714, in the non-volatile memory 1716, and/or on a removable non-transitory computer readable storage medium such as a CD or DVD.

From the foregoing, it will be appreciated that example methods, apparatus and articles of manufacture have been disclosed that enable dynamic network evaluation and network selection to optimize transmission of messages from an aircraft. The examples techniques described herein enable the generation of network maps by a ground-based computing device from data transmitted by aircraft and the use of network maps to generate forecasts pertaining to network availability on an onboard computing device of the aircraft. The generation of such network maps and forecasts thus enables intelligent network transmission schemes, which take into account current and future conditions to transmit messages via preferred networks at preferred times. Consequently, the techniques disclosed herein significantly improve conventional transmission technologies by generating and utilizing forecast data, bundling messages based on specific rules, enabling intelligent delayed message transmission based on the forecast data, analyzing messages and networks in an improved process for automatic target network selection, and providing numerous other improvements.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. A computing device (106) onboard an aircraft for managing aircraft messages, the onboard computing device comprising:
a message receiver configured to receive messages entered into systems on the aircraft for transmission to a ground-based facility;
a message analyzer (304) arranged to:
i) receive a first message from the message receiver during a current flight;
ii) determine for the first message, based on a message type,
a maximum allowable delay period associated with the first message to be transmitted during the current flight of the aircraft, wherein the maximum allowable delay period is a maximum allowable delay value added to the time at which the first message was received, representing the latest time that the first message can be transmitted
from the onboard computing device system of the aircraft; and
iii) receive request information from an operator of the aircraft to set the message type and the maximum allowable delay period in order to manually adjust a transmission of the first message;
a mapping data analyzer (312) arranged to generate, based on network map data collected during a prior flight, a forecast of network availability associated with a transmission of the first message;
a target network determiner (314) arranged to determine, based on the forecast of network availability, a target network for the transmission of the first message, the target network having a predicted availability at a time during the current flight within the maximum allowable delay period; and
a message outputter (322) arranged to output, prior to the end of
the maximum allowable delay period, in response to the target network being available, the first message via the target network.

2. . The onboard computing device (106) of claim 1, further including a message bundler (306) arranged to combine the first message with a second message to create a third message in response to the first message and the second message satisfying a compatibility criterion.

3. . The onboard computing device (106) of claim 2, wherein the message analyzer (304) is further arranged to determine a maximum allowable delay period associated with the third message based on the maximum allowable delay period of the first message.

4. . The onboard computing device (106) of any of claims 1 to 3, wherein the forecast of network availability includes a forecast of network traffic.

5. . The onboard computing device (106) of any of claims 1 to 4, wherein the forecast of network availability is based on a flight path for an aircraft.

6. . The onboard computing device (106) of any of claims 1 to 5, wherein the target network is determined additionally based on a security requirement for the first message, the target network being the lowest cost network meeting the security requirement.

7. . The onboard computing device (106) of any of claims 1 to 6, further including a network communicator (318) arranged to determine an availability of a network, the network communicator (318) further arranged to additionally transmit the availability of the network to an apparatus (112) for mapping network availability.

8. . The onboard computing device (106) of any of claims 1 to 7, wherein the forecast of network availability includes a probability that the target network will be available for transmission at a time prior to the maximum allowable delay period.

9. . A non-transitory computer readable storage medium comprising computer readable instructions (400, 500, 600) that, when executed, is to cause a processor (1712) to at least:
receive messages entered into systems on an aircraft for transmission to a ground-based facility;
receive a first message during a current flight; determine for
the first message, based on a message type, a maximum allowable delay period associated with the first message to be transmitted during the current flight, wherein the maximum allowable delay period is a maximum allowable delay value added to the time at which the first message was received, representing the latest time that the first message can be transmitted from an onboard computing device system of the aircraft; and
receive request information from an operator of the aircraft to set the message type and the maximum allowable delay period in order to manually adjust a transmission of the first message;
generate, based on network map data collected during a prior flight, a forecast of network availability associated with a transmission of the first message (424);
determine, based on the forecast of network availability, a target network for the transmission of the first message, the target network having a predicted availability at a time during the current flight within the maximum allowable delay period (404, 432, 436); and
output, prior to the end of the maximum allowable delay period,
in response to the target network being available, the first message via the target network (448, 706).

10. . The non-transitory computer readable storage medium of claim 9, wherein the instructions (400, 500, 600), when executed, further cause the processor (1712) to combine the first message with a second message to create a third message in response to the first message and the second message meeting a compatibility criterion (408, 410).

11. . The non-transitory computer readable storage medium of claim 10, wherein the instructions (400, 500, 600), when executed, further cause the processor (1712) to determine a maximum allowable delay period associated with the third message based on the maximum allowable delay period of the first message (410, 414).

12. . The non-transitory computer readable storage medium of any of claims 9 to 11, wherein the target network is determined additionally based on a security requirement for the first message, the target network being the lowest cost network meeting the security requirement (420).

13. . The non-transitory computer readable storage medium of any of claims 9 to 12, wherein the instructions (400, 500, 600), when executed, further cause the processor (1712) to output the first message via a best available network in response to the maximum allowable delay period being reached and the target network not being available (436, 446, 448).

14. . The non-transitory computer readable storage medium of any of claims 9 to 13, wherein the instructions (400, 500, 600), when executed, further cause the processor (1712) to determine an availability of a network and to transmit the availability of the network for mapping network availability (602).

15. . The non-transitory computer readable storage medium of any of claims 9 to 14, wherein the forecast of network availability is based on a flight path for an aircraft (424).

## Patentansprüche

1. Rechenvorrichtung (106) an Bord eines Luftfahrzeugs zum Verwalten von Luftfahrzeugnachrichten, wobei die Onboard-Rechenvorrichtung Folgendes umfasst:
einen Nachrichtenempfänger, der konfiguriert ist, um Nachrichten zu empfangen, die in Systeme in dem Luftfahrzeug für eine Übertragung an eine bodengestützte Einrichtung eingegeben werden;
einen Nachrichtenanalysator (304), der für Folgendes angeordnet ist:
i) Empfangen einer ersten Nachricht von dem Nachrichtenempfänger während eines aktuellen Flugs;
ii) Bestimmen, für die erste Nachricht, basierend auf einer Nachrichtenart, einer maximal zulässigen Verzögerungsperiode, die mit der ersten Nachricht verknüpft ist, die während des aktuellen Flugs des Luftfahrzeugs übertragen werden soll, wobei die maximal zulässige Verzögerungsperiode ein maximal zulässiger Verzögerungswert ist, der zu der Zeit hinzugefügt wird, zu der die erste Nachricht empfangen wurde, die den letzten Zeitpunkt darstellt, zu dem die erste Nachricht von dem Onboard-Rechenvorrichtungssystem des Luftfahrzeugs übertragen werden kann; und
iii) Empfangen von Anforderungsinformationen von einem Betreiber des Luftfahrzeugs, um die Nachrichtenart und die maximal zulässige Verzögerungsperiode einzustellen, um eine Übertragung der ersten Nachricht manuell anzupassen;
einen Zuordnungsdatenanalysator (312), der angeordnet ist, um basierend auf Netzwerkzuordnungsdaten, die während eines vorherigen Flugs gesammelt wurden, eine Vorhersage über eine Netzwerkverfügbarkeit zu erzeugen, die mit einer Übertragung der ersten Nachricht verknüpft ist;
einen Zielnetzwerkbestimmer (314), der angeordnet ist, um basierend auf der Vorhersage über die Netzwerkverfügbarkeit ein Zielnetzwerk für die Übertragung der ersten Nachricht zu bestimmen, wobei das Zielnetzwerk eine prognostizierte Verfügbarkeit zu einem Zeitpunkt während des aktuellen Flugs innerhalb der maximal zulässigen Verzögerungsperiode aufweist; und
einen Nachrichtenausgeber (322), der angeordnet ist, um vor dem Ende der maximal zulässigen Verzögerungsperiode als Reaktion darauf, dass das Zielnetzwerk verfügbar ist, die erste Nachricht über das Zielnetzwerk auszugeben.

2. Onboard-Rechenvorrichtung (106) nach Anspruch 1, die ferner einen Nachrichtenbündler (306) beinhaltet, der angeordnet ist, um die erste Nachricht mit einer zweiten Nachricht zu kombinieren, um als Reaktion darauf, dass die erste Nachricht und die zweite Nachricht ein Kompatibilitätskriterium erfüllen, eine dritte Nachricht zu erzeugen.

3. Onboard-Rechenvorrichtung (106) nach Anspruch 2, wobei der Nachrichtenanalysator (304) ferner angeordnet ist, um eine maximal zulässige Verzögerungsperiode, die mit der dritten Nachricht verknüpft ist, basierend auf der maximal zulässigen Verzögerungsperiode der ersten Nachricht zu bestimmen.

4. Onboard-Rechenvorrichtung (106) nach einem der Ansprüche 1 bis 3, wobei die Vorhersage über die Netzwerkverfügbarkeit eine Vorhersage über einen Netzwerkverkehr beinhaltet.

5. Onboard-Rechenvorrichtung (106) nach einem der Ansprüche 1 bis 4, wobei die Vorhersage über die Netzwerkverfügbarkeit auf einer Flugroute für ein Luftfahrzeug basiert.

6. Onboard-Rechenvorrichtung (106) nach einem der Ansprüche 1 bis 5, wobei das Zielnetzwerk zusätzlich basierend auf einer Sicherheitsanforderung für die erste Nachricht bestimmt wird, wobei das Zielnetzwerk das Netzwerk mit den niedrigsten Kosten ist, das die Sicherheitsanforderung erfüllt.

7. Onboard-Rechenvorrichtung (106) nach einem der Ansprüche 1 bis 6, die ferner einen Netzwerkkommunikator (318) beinhaltet, der angeordnet ist, um eine Verfügbarkeit eines Netzwerks zu bestimmen, wobei der Netzwerkkommunikator (318) ferner angeordnet ist, um zusätzlich die Verfügbarkeit des Netzwerks an eine Einrichtung (112) zum Zuordnen der Netzwerkverfügbarkeit zu übertragen.

8. Onboard-Rechenvorrichtung (106) nach einem der Ansprüche 1 bis 7, wobei die Vorhersage über die Netzwerkverfügbarkeit eine Wahrscheinlichkeit beinhaltet, dass das Zielnetzwerk zu einem Zeitpunkt vor der maximal zulässigen Verzögerungszeitperiode für die Übertragung verfügbar ist.

9. Nichtflüchtiges computerlesbares Speichermedium, das computerlesbare Anweisungen (400, 500, 600) umfasst, die, wenn die ausgeführt werden, einen Prozessor (1712) zu wenigstens Folgendem veranlassen:
Empfangen von Nachrichten, die in Systeme in einem Luftfahrzeug für die Übertragung an eine bodengestützte Einrichtung eingegeben werden;
Empfangen einer ersten Nachricht während eines aktuellen Flugs;
Bestimmen, für die erste Nachricht, basierend auf einer Nachrichtenart, einer maximal zulässigen Verzögerungsperiode, die mit der ersten Nachricht verknüpft ist, die während des aktuellen Flugs übertragen werden soll, wobei die maximal zulässige Verzögerungsperiode ein maximal zulässiger Verzögerungswert ist, der zu der Zeit hinzugefügt wird, zu der die erste Nachricht empfangen wurde, die den letzten Zeitpunkt darstellt, zu dem die erste Nachricht von einem Onboard-Rechenvorrichtungssystem des Luftfahrzeugs übertragen werden kann; und
Empfangen von Anforderungsinformationen von einem Betreiber des Luftfahrzeugs, um die Nachrichtenart und die maximal zulässige Verzögerungsperiode einzustellen, um eine Übertragung der ersten Nachricht manuell anzupassen;
Erzeugen, basierend auf Netzwerkzuordnungsdaten, die während eines vorherigen Flugs gesammelt wurden, einer Vorhersage über die Netzwerkverfügbarkeit, die mit einer Übertragung der ersten Nachricht (424) verknüpft ist;
Bestimmen, basierend auf der Vorhersage über die Netzwerkverfügbarkeit, eines Zielnetzwerks für die Übertragung der ersten Nachricht, wobei das Zielnetzwerk eine prognostizierte Verfügbarkeit zu einem Zeitpunkt während des aktuellen Flugs innerhalb der maximal zulässigen Verzögerungsperiode (404, 432, 436) aufweist; und
Ausgeben, vor dem Ende der maximal zulässigen Verzögerungsperiode, als Reaktion darauf, dass das Zielnetzwerk verfügbar ist, der ersten Nachricht über das Zielnetzwerk (448, 706).

10. Nichtflüchtiges computerlesbares Speichermedium nach Anspruch 9, wobei die Anweisungen (400, 500, 600), wenn sie ausgeführt werden, den Prozessor (1712) ferner veranlassen, die erste Nachricht mit einer zweiten Nachricht zu kombinieren, um als Reaktion darauf, dass die erste Nachricht und die zweite Nachricht ein Kompatibilitätskriterium (408, 410) erfüllen, eine dritte Nachricht zu erzeugen.

11. Nichtflüchtiges computerlesbares Speichermedium nach Anspruch 10, wobei die Anweisungen (400, 500, 600), wenn sie ausgeführt werden, den Prozessor (1712) ferner veranlassen, eine maximal zulässige Verzögerungsperiode zu bestimmen, die mit der dritten Nachricht verknüpft ist, basierend auf der maximal zulässigen Verzögerungsperiode der ersten Nachricht (410, 414).

12. Nichtflüchtiges computerlesbares Speichermedium nach einem der Ansprüche 9 bis 11, wobei das Zielnetzwerk zusätzlich basierend auf einer Sicherheitsanforderung für die erste Nachricht bestimmt wird, wobei das Zielnetzwerk das Netzwerk mit den niedrigsten Kosten ist, das die Sicherheitsanforderung (420) erfüllt.

13. Nichtflüchtiges computerlesbares Speichermedium nach einem der Ansprüche 9 bis 12, wobei die Anweisungen (400, 500, 600), wenn sie ausgeführt werden, den Prozessor (1712) ferner veranlassen, als Reaktion darauf, dass die maximal zulässige Verzögerungsperiode erreicht wird und das Zielnetzwerk nicht verfügbar (436, 446, 448) ist, die erste Nachricht über ein bestes verfügbares Netzwerk auszugeben.

14. Nichtflüchtiges computerlesbares Speichermedium nach einem der Ansprüche 9 bis 13, wobei die Anweisungen (400, 500, 600), wenn sie ausgeführt werden, den Prozessor (1712) ferner veranlassen, eine Verfügbarkeit eines Netzwerks zu bestimmen und die Verfügbarkeit des Netzwerks zum Zuordnen der Netzwerkverfügbarkeit (602) zu übertragen.

15. Nichtflüchtiges computerlesbares Speichermedium nach einem der Ansprüche 9 bis 14, wobei die Vorhersage über die Netzwerkverfügbarkeit auf einer Flugroute für ein Luftfahrzeug (424) basiert.

## Revendications

1. Dispositif informatique (106) embarqué dans un aéronef permettant de gérer des messages d'aéronef, le dispositif informatique embarqué comprenant :
un récepteur de message configuré pour recevoir des messages entrés dans des systèmes sur l'aéronef pour une transmission à une installation au sol ;
un analyseur de message (304) configuré pour :
i) recevoir un premier message provenant du récepteur de message pendant un vol en cours ;
ii) déterminer pour le premier message, sur la base d'un type de message, une période de retard admissible maximale associée au premier message à transmettre pendant le vol en cours de l'aéronef, la période de retard admissible maximale étant une valeur de retard admissible maximale ajoutée au moment auquel le premier message a été reçu, représentant le dernier moment auquel le premier message peut être transmis depuis le système de dispositif informatique embarqué de l'aéronef ; et
iii) recevoir des informations de demande provenant d'un opérateur de l'aéronef pour régler le type de message et la période de retard admissible maximale afin de régler manuellement une transmission du premier message ;
un analyseur de données de mise en correspondance (312) configuré pour générer, sur la base des données de carte de réseau collectées pendant un vol précédent, une prévision de disponibilité de réseau associée à une transmission du premier message ;
un déterminant de réseau cible (314) configuré pour déterminer, sur la base de la prévision de disponibilité de réseau, un réseau cible pour la transmission du premier message, le réseau cible ayant une disponibilité prédite à un moment pendant le vol en cours dans la période de retard admissible maximale ; et
un émetteur de messages (322) configuré pour émettre, avant la fin de la période de retard admissible maximale, en réponse à la disponibilité du réseau cible, le premier message par l'intermédiaire du réseau cible.

2. Dispositif informatique embarqué (106) selon la revendication 1, comportant en outre un groupeur de messages (306) configuré pour combiner le premier message avec un deuxième message pour créer un troisième message en réponse au premier message et au deuxième message satisfaisant à un critère de compatibilité.

3. Dispositif informatique embarqué (106) selon la revendication 2, dans lequel l'analyseur de message (304) est en outre configuré pour déterminer une période de retard admissible maximale associée au troisième message sur la base de la période de retard admissible maximale du premier message.

4. Dispositif informatique embarqué (106) selon l'une quelconque des revendications 1 à 3, dans lequel la prévision de disponibilité de réseau comporte une prévision de trafic de réseau.

5. Dispositif informatique embarqué (106) selon l'une quelconque des revendications 1 à 4, dans lequel la prévision de disponibilité de réseau est basée sur une trajectoire de vol pour un aéronef.

6. Dispositif informatique embarqué (106) selon l'une quelconque des revendications 1 à 5, dans lequel le réseau cible est déterminé également sur la base d'une exigence de sécurité pour le premier message, le réseau cible étant le réseau le moins cher satisfaisant à l'exigence de sécurité.

7. Dispositif informatique embarqué (106) selon l'une quelconque des revendications 1 à 6, comportant en outre un communicateur réseau (318) configuré pour déterminer une disponibilité d'un réseau, le communicateur réseau (318) étant en outre configuré pour transmettre également la disponibilité du réseau à un appareil (112) pour mettre en correspondance la disponibilité de réseau.

8. Dispositif informatique embarqué (106) selon l'une quelconque des revendications 1 à 7, dans lequel la prévision de disponibilité de réseau comporte une probabilité selon laquelle le réseau cible sera disponible pour une transmission à un moment antérieur à la période de retard admissible maximale.

9. Support de stockage non transitoire lisible par ordinateur comprenant des instructions lisibles par ordinateur (400, 500, 600) qui, lorsqu'elles sont exécutées, doivent amener un processeur (1712) à au moins :
recevoir des messages entrés dans des systèmes sur un aéronef pour une transmission à une installation au sol ;
recevoir un premier message pendant un vol en cours ;
déterminer pour le premier message, sur la base d'un type de message, une période de retard admissible maximale associée au premier message à transmettre pendant le vol en cours, la période de retard admissible maximale étant une valeur de retard admissible maximale ajoutée au moment auquel le premier message a été reçu, représentant le dernier moment auquel le premier message peut être transmis depuis un système de dispositif informatique embarqué de l'aéronef ; et
recevoir des informations de demande provenant d'un opérateur de l'aéronef pour régler le type de message et la période de retard admissible maximale afin de régler manuellement une transmission du premier message ;
générer, sur la base des données de carte de réseau collectées pendant un vol précédent, une prévision de disponibilité de réseau associée à une transmission du premier message (424) ;
déterminer, sur la base de la prévision de disponibilité de réseau, un réseau cible pour la transmission du premier message, le réseau cible ayant une disponibilité prédite à un moment pendant le vol en cours dans la période de retard admissible maximale (404, 432, 436) ; et
émettre, avant la fin de la période de retard admissible maximale, en réponse à la disponibilité du réseau cible, le premier message par l'intermédiaire du réseau cible (448, 706).

10. Support de stockage non transitoire lisible par ordinateur selon la revendication 9, dans lequel les instructions (400, 500, 600), lorsqu'elles sont exécutées, amènent en outre le processeur (1712) à combiner le premier message avec un deuxième message pour créer un troisième message en réponse au premier message et au deuxième message satisfaisant à un critère de compatibilité (408, 410).

11. Support de stockage non transitoire lisible par ordinateur selon la revendication 10, dans lequel les instructions (400, 500, 600), lorsqu'elles sont exécutées, amènent en outre le processeur (1712) à déterminer une période de retard admissible maximale associée au troisième message sur la base de la période de retard admissible maximale du premier message (410, 414).

12. Support de stockage non transitoire lisible par ordinateur selon l'une quelconque des revendications 9 à 11, dans lequel le réseau cible est déterminé également sur la base d'une exigence de sécurité pour le premier message, le réseau cible étant le réseau le moins cher satisfaisant à l'exigence de sécurité (420).

13. Support de stockage non transitoire lisible par ordinateur selon l'une quelconque des revendications 9 à 12, dans lequel les instructions (400, 500, 600), lorsqu'elles sont exécutées, amènent en outre le processeur (1712) à émettre le premier message par l'intermédiaire d'un réseau disponible optimal en réponse à la période de retard admissible maximale étant atteinte et au réseau cible n'étant pas disponible (436, 446, 448).

14. Support de stockage non transitoire lisible par ordinateur selon l'une quelconque des revendications 9 à 13, dans lequel les instructions (400, 500, 600), lorsqu'elles sont exécutées, amènent en outre le processeur (1712) à déterminer une disponibilité d'un réseau et à transmettre la disponibilité du réseau pour mettre en correspondance la disponibilité de réseau (602).

15. Support de stockage non transitoire lisible par ordinateur selon l'une quelconque des revendications 9 à 14, dans lequel la prévision de disponibilité de réseau est basée sur une trajectoire de vol pour un aéronef (424).
